# FASCICULE DE BREVET EUROPEEN

(11) **EP 3 110 854 B1**
(45) Date de publication et mention de la délivrance du brevet: **11.04.2018**
(21) Numéro de dépôt: 15713543.5
(22) Date de dépôt: 27.02.2015
(51) Int. Cl.: C08F 2/46, C09D 163/00

(54) **COMPOSITION POLYMÉRISABLE DUAL-CURE-CATIONIQUE ET PROCÉDÉ DE FABRICATION D'UN REVÊTEMENT OU D'UN MATÉRIAU COMPOSITE METTANT EN OEUVRE LADITE COMPOSITION**
ZWEIFACH HÄRTENDE KATIONISCH POLYMERISIERBARE ZUSAMMENSETZUNG UND VERFAHREN ZUR HERSTELLUNG EINER BESCHICHTUNG ODER EINER VERBUNDSTOFFES MIT DER ZUSAMMENSETZUNG
DUAL-CURE CATIONICALLY POLYMERISABLE COMPOSITION AND METHOD FOR PRODUCING A COATING OR A COMPOSITE MATERIAL IMPLEMENTING SAID COMPOSITION

(30) Priorité: 28.02.2014 FR 1451647
(43) Date de publication de la demande: 04.01.2017
(73) Titulaire: A ET A - Mader, 59800 Lille (FR); Université de Haute Alsace, 68093 Mulhouse (FR)
(72) Inventeur: MARECHAL, David, 84250 Le Thor (FR); CRIQUI, Adrien, 68190 Ungersheim (FR); ALLONAS, Xavier, F-68100 Mulhouse (FR); LECOMPERE, Maxime, F-68100 Mulhouse (FR)
(74) Mandataire: Balesta, Pierre
(86) Numéro de dépôt international: PCT/FR2015/050490
(87) Numéro de publication internationale: WO 2015/136180

(56) Documents cités:
- EP-A2- 0 066 543
- WO-A2-00/04075
- DE-A1-102007 038 573
- US-B1- 6 632 897

## Description

La présente invention concerne le domaine des compositions polymérisables par voie cationique, éventuellement sous rayonnement ou bombardement d'électrons, comportant un monomère réactif et un système amorceur apte à démarrer une polymérisation cationique comprenant un sel cationique et un co-amorceur. La polymérisation cationique dans le cadre de la présente invention peut être amorcée par deux voies différentes, qui peuvent être combinées : une irradiation lumineuse du sel cationique pour la première voie et la réaction thermique entre le monomère réactif et une ou plusieurs espèces libérée(s) par réaction exothermique entre le sel cationique et le co-amorceur, notamment sans apport de chaleur externe, pour la seconde voie. L'invention concerne également un procédé de polymérisation cationique d'une telle composition.

### Arrière-plan de l'invention

La photopolymérisation cationique s'est développée dans le but de permettre la polymérisation sous irradiation lumineuse de monomères ne pouvant pas être polymérisés par voie radicalaire, par exemple les résines époxy.

La photopolymérisation par voie cationique des résines époxy s'est ainsi notamment développée dans le domaine des peintures, des revêtements et des adhésifs. La photopolymérisation cationique souffre cependant de vitesses de polymérisation plus lentes et de taux de conversion finaux plus faibles que ceux obtenus par la polymérisation par voie radicalaire. Le séchage de peintures à base d'époxy ou le durcissement de pièces à base d'époxy peut ainsi durer une dizaine de minutes à plusieurs heures.

De plus, la photopropagation dans l'épaisseur des revêtements à polymériser, et donc les épaisseurs photo-polymérisées obtenues sont plus limitées par voie cationique du fait du nombre limité d'amorceurs et de monomères potentiels mais aussi en raison de la complexité des mécanismes de polymérisation.

La photopolymérisation cationique est ainsi davantage destinée à des produits peu épais et/ou peu chargés et/ou peu colorés. La photopolymérisation cationique s'est considérablement développée à partir des travaux académiques et industriels de J. V. Crivello qui a découvert la famille des sels d'onium en tant que photoamorceurs (cf.publications suivantes : J. V. Crivello, T. P. Lockart et J. L. Lee. Journal of Polymer Science Polymer Chemistry Edition. 21, 97-109 (1983) étudiant la décomposition thermique de sels d'iodonium et de sulfonium par apport de chaleur ; J. V. Crivello Advances in Polymer Science. 62, 1-48 (1984) étudiant des sels d'iodonium et sulfonium en tant que photoamorceurs).

Cette famille de photoamorceurs comprend les sels d'iodonium, de sulfonium, de phosphonium et de pyridinium.

Les sels d'iodonium et de sulfonium sont les plus employés. Les sels de phosphonium sont délicats à utiliser du fait de leur toxicité. Les sels de pyridinium sont des photoamorceurs plus complets car ils permettent d'amorcer seuls une polymérisation cationique sous irradiation ou par voie thermique mais avec chauffage du sel afin de le déstabiliser et provoquer sa décomposition, la température de chauffage est supérieure à 40°C et peut aller jusqu'à 120°C. Ces derniers sels ont été développés et étudiés par Y. Yagci (cf.publications : Y. Yagci et T. End. Advances in Polymer Science. 127, 59-86 (1997) étudiant des sels de pyridinium en tant que photoamorceur ou amorceur thermique; Y. Yagci et I. Reetz Progress in Polymer Science. 23, 1485-1538 (1998) étudiant des sels de pyridinium en tant que photoamorceur ou amorceur thermique).

La polymérisation cationique par voie thermique, en particulier des époxys est plutôt limitée en raison du faible nombre d'amorceurs disponibles. Les résines époxy sont habituellement polymérisées par des amines en tant qu'amorceur principal ou secondaire (co-amorceur).

On connait également des systèmes amorceurs composés d'anhydrides d'acide ou encore de thiols. Ces trois systèmes amorceurs à savoir amine, anhydride d'acide et thiols conduisent à une polymérisation de type anionique ou à une polycondensation. La structure du polymère obtenue par polycondensation est très différente des structures obtenues par voie anionique ou cationique. Dans le cas d'une polycondensation, un maillage 3D est constitué par des chaînes polymères reliées entre elles par des ponts de nature azotée. Il s'agit donc plus d'un copolymère que d'un homopolymère, notamment d'époxy. Dans le cas de la polymérisation cationique et anionique, un maillage 3D peut être créé avec des noeuds de réticulation de même nature chimique que les chaines polymères. Dans ce cas, on forme un réseau polyéther.

Afin de pouvoir polymériser des épaisseurs plus importantes que celles obtenues en photopolymérisation, des systèmes amorceurs hybrides faisant intervenir deux chimies différentes, à savoir celle des époxys et celle des uréthanes, par exemple, ont été développés.

On connait également des systèmes amorceurs permettant de polymériser par voie photochimique puis par voie thermique en chauffant.

EP 0.066.543 a pour objet des compositions polymérisables comprenant des monomères epoxy (A) polymérisés par apport de chaleur externe auxdites compositions, c'est-à-dire par chauffage, en présence d'un catalyseur (B) et d'un co-catalyseur (C). Le catalyseur (B) ou initiateur comprend un sel d'ammonium quaternaire, en particulier un composé N-hétérocyclique aromatique. Le co-catalyseur (C) sous l'effet du chauffage génère un radical qui va réduire le catalyseur (B) dans une réaction d'oxydo-réduction dont le sous-produit va amorcer la réaction de polymérisation par réaction avec le monomère (A). Sans apport de chaleur, et donc à température ambiante, aucune réaction de polymérisation ne peut avoir lieu.

Il existe donc un besoin pour un système amorceur de polymérisation cationique permettant de combiner une photopolymérisation et/ou une polymérisation par voie thermique en présence d'un co-amorceur, sans apport de chaleur, pouvant polymériser par voie photochimique en surface et par voie thermique au coeur de la couche à polymériser en fonction de ladite couche, qu'elle soit chargée et/ou pigmentée et/ou comprenne un renfort. De tels systèmes sont qualifiés de systèmes dual-cure cationiques.

On comprend par système dual-cure dans le cadre de la présente invention, tout système faisant intervenir deux processus de polymérisation, c'est à dire un processus photochimique et un processus thermique (notamment par le biais de l'exothermie de la réaction). Le terme dual-cure signifie que la chimie de polymérisation par voie photochimique et thermique est similaire. Dans le cas de deux chimies différentes, par exemple une chimie radicalaire et une chimie cationique ou encore une chimie des époxys et une chimie des uréthanes par exemple, il s'agit d'une polymérisation hybride.

La présente invention a ainsi pour objet une composition polymérisable par voie cationique dual-cure, utilisant une même chimie issue d'un même amorceur pour l'amorçage photochimique et/ou l'amorçage thermique selon l'épaisseur et la transparence du revêtement à polymériser (éventuellement chargé et/ou pigmenté).

### Objet et résumé de l'invention

La présente invention a pour objet, selon un premier aspect, un kit pour composition polymérisable, ledit kit comprenant :
- une partie A constituée par une composition comprenant au moins un monomère réactif (a1) envers une espèce cationique ou une espèce acide de Lewis ou de Brönsted, et au moins un co-amorceur (b);
- une partie B comprenant, optionnellement un solvant et/ou au moins un monomère réactif (a2) envers une espèce cationique ou une espèce acide de Lewis ou de Brönsted, et au moins un sel cationique (e) choisi parmi les sels de formule S1, S2, S3 et S4 ci-dessous, 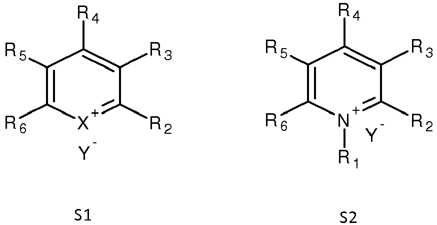 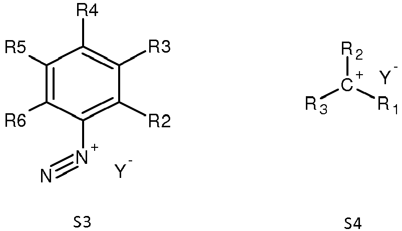
dans lesquelles :
- X représente un atome de carbone ou un hétéroatome chargé positivement différent de l'azote ;
- Y représente une ou plusieurs espèce(s) anionique(s) stabilisante(s) de l'espèce cationique du sel S1 ou S2 ou S3 ou S4, en particulier comprenant au moins une espèce anionique choisie seule ou en combinaison parmi Br⁻, Cl⁻, BF₄⁻, PF₆⁻, AsF₆⁻, AnF₆⁻, SbF₆⁻, SnF₆⁻, ClO₄⁻, les sulfonates tels que le trifluorométhane sulfonate , le perfluorosulfonate, le tris [(trifluoromethyl)sulfonyl]methanide et le tetra (pentafluorophenylborate) ;
- R₁ à R₆ sont choisis indépendamment les uns des autres parmi le ou les atomes, le ou les groupes suivants, seul(s) ou en combinaison, éventuellement agencés en sorte de supporter une ou plusieurs charges positives: un atome d'hydrogène ; un groupe nitro - NO₂ ; un groupe cyano -CN ; un atome d'halogène ; un groupe alkyle en C₁-C₂₀, éventuellement substitué par un ou plusieurs groupe(s) ou un ou plusieurs atomes choisi(s) indépendamment dans la liste I comprenant les groupes ou atome suivants : hydroxyle; carbonyle, alcènyle, aryle, hétéroaryle, éther, ester, aldéhyde, cétone, acide carboxylique, halogène, amine primaire, amine secondaire, amine tertiaire, amide primaire, amine secondaire, amine tertiaire, urée, thioester, thiocarbonate, sulfoxyde, sulfone, phosphine, phosphorane, oxyde de phosphine, cycloalkyle, hétérocycloalkyle, ou leur combinaison; un groupe alcoxy en C₁-C₂₀, éventuellement substitué par un groupe alkyle en C₁-C₂₀ et/ou un ou plusieurs groupe(s) ou un ou plusieurs atomes choisi(s) indifféremment dans la liste I ; un groupe aryle; un groupe hétéroaryle; un groupe cycloalkyle ; un groupe hétérocycloalkyle ; le ou ledits groupes (hétéro)aryle(s) et/ou le ou lesdits groupes (hétéro)cycloalkyles étant éventuellement substitué par un ou plusieurs groupe(s) choisi(s) indépendamment dans la liste I ; un groupe acyle; un groupe aroyle ; un groupe alcoxy carbonyle; un groupe carbamyle.

Ledit kit comprend également de façon optionnelle un photosensibilisateur (c) qui est indifféremment dans la partie A et/ou la partie B.

Il a été trouvé que les amorceurs S1 et/ou S2 et/ou S3 et/ou S4 peuvent amorcer une polymérisation du ou des monomère(s) réactif(s) (a1) et/ou (a2) par réaction avec un co-amorceur (b) notamment sans apport de chaleur externe au mélange comprenant les parties A et B.

Avantageusement, la réaction entre ledit sel selon l'invention avec un co-amorceur est exothermique, en présence ou non de rayonnement et/ou de bombardement d'électrons, de sorte que la polymérisation thermique peut être amorcée dans des épaisseurs importantes et ce à température ambiante, et donc sans apport de chaleur externe au mélange comprenant les parties A et B.

L'invention permet de faire polymériser sur des épaisseurs de quelques microns à plusieurs centimètres et de façon bien contrôlée des monomères réactifs (a) à l'addition de cations ou d'espèces acides, et notamment des monomères qui sont ou comprennent un ou plusieurs groupe(s) éthercyclique(s).

Avantageusement, le kit selon l'invention permet de réaliser un polymère de la même nature avec une réaction de polymérisation identique : la polymérisation cationique. Un maillage 3D peut être créé avec des noeuds de réticulation de même nature chimique que les chaines polymères. On forme par exemple, un réseau polyéther s'agissant d'un monomère réactif qui est ou comprend au moins un groupe éthercyclique.

On comprend, par rayonnement donné, tout rayonnement tel que les rayons ultraviolets et/ou visibles, notamment ayant des longueurs d'onde comprises dans l'intervalle [100 nm - 1000 nm], bornes incluses. La photopolymérisation selon l'invention peut être également induite par bombardement électronique. On entend par « irradié », tout composant, tel le sel (e) selon l'invention, soumis à un rayonnement ou à un bombardement d'électrons.

Le trifluorométhane sulfonate est également connu en tant qu'ion triflate (CF₃S0₃⁻), et le tetra (pentafluorophenylborate) est également connu en tant que tris(2,3,5,6-tétrafluorophenyl)borate.

Le kit selon l'invention comprend comme système amorceur au moins un sel choisi parmi les sels S1, S2, S3 et S4, de préférence choisi parmi les sels S1, S3 et S4, encore de préférence choisi parmi les sels S1 et S4, plus particulièrement un sel choisi parmi les sels S1, aptes à former une espèce amorceur de la réaction de polymérisation dudit monomère réactif (a1,a2) par réaction avec un co-amorceur (b), sous l'effet ou en l'absence d'un rayonnement ou d'un bombardement d'électrons.

La composition polymérisable peut comprendre plusieurs sels choisis indifféremment parmi S1, S2, S3 et S4.

Le sel cationique (e) peut comprendre plusieurs charges positives.

Si le sel cationique S1, S2, S3 ou S4 comprend plusieurs charges positives, Y peut être plusieurs espèces anioniques différentes ou identiques.

On entend, par amorceur, un composé chimique qui permet de démarrer la réaction de polymérisation cationique, à ne pas confondre avec un co-amorceur. Un co-amorceur réagit avec l'amorceur, soit dans le but de débuter la réaction de polymérisation par réaction avec l'amorceur, soit dans le but de s'additionner à l'action de l'amorceur et augmenter la vitesse de la réaction de polymérisation.

De préférence, le ou les co-amorceur(s) est/sont une espèce nucléophile ou un sel métallique (métal) ou un sel organométallique, encore de préférence une espèce nucléophile.

On entend par nucléophile, toute entité riche en électrons chargée négativement ou possédant au moins un doublet électronique libre qui présente une affinité pour tout centre appauvri en électrons (appelé électrophile).

On entend par sel organométallique, tout composé dans lequel un atome de métal est lié directement à un ou plusieurs atomes de carbone.

De préférence, le monomère réactif (a1) et/ou le monomère réactif (a2) et/ou le co-amorceur (b) et/ou le photo-sensibilisateur (c) et/ou l'agent régulateur de la vitesse de polymérisation (d) et/ou le sel cationique (e) est/sont différents.

Le monomère réactif (a1) et le monomère réactif (a2) peuvent être identiques. Chacune des parties A et B (indépendamment l'une de l'autre) peut comprendre plusieurs monomères réactifs (a1,a2) selon l'invention qui sont différents. La partie A peut comprendre plusieurs co-amorceurs selon l'invention qui sont différents. La partie B peut comprendre plusieurs sels cationiques (e) selon l'invention qui sont différents.

Chacune des parties A et B peut comprendre plusieurs agents régulateurs de la vitesse de polymérisation (d) selon l'invention qui sont différents et/ou plusieurs photo-sensibilisateurs (c) qui sont différents.

De préférence, X est un atome de soufre ou d'oxygène s'agissant du sel S1, encore de préférence un atome d'oxygène.

Le sel S4 est un sel de carbénium, qui peut être un sel primaire R₁-CH₂⁺, un sel secondaire R₁R₂CH⁺ ou en sel tertiaire R₁R₂R₃C⁺.

L'espèce cationique couplée à un contre ion Y⁻ forme un sel cationique.

Les substituants R₁ et/ou R₂ et/ou R₃ et/ou R₄ et/ou R₅ et/ou R₆ peuvent être identiques ou non.

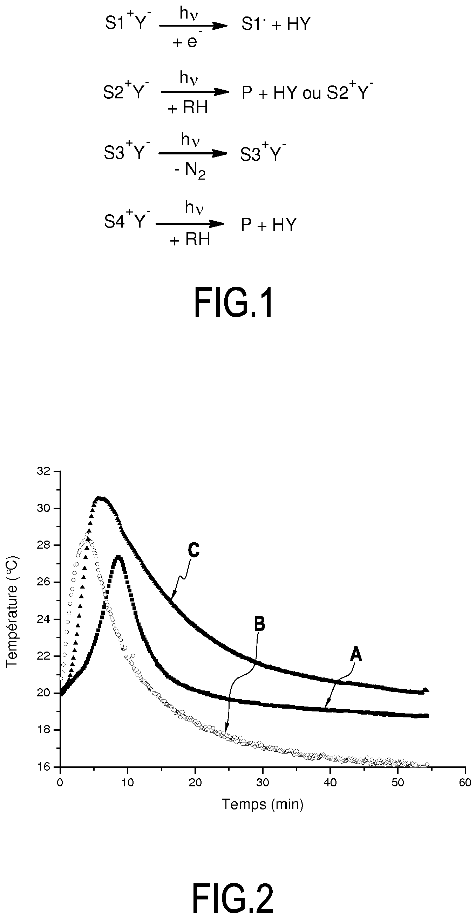

Sans être lié par une théorie scientifique, sous l'effet d'un rayonnement ou d'un bombardement d'électrons, les performances de l'invention pourraient s'expliquer selon les mécanismes illustrés à la figure 1 annexée à la présente, en l'absence d'un photosensibilisateur (c), d'un co-amorceur (b) et d'un agent régulateur de la vitesse de polymérisation (d).

Les sels cationiques S1, S2, S3 et S4 se comporteraient comme des photoamorceurs cationiques. Sous rayonnement, l'espèce S1, S2, S3 ou S4 deviendrait une espèce excitée S1*, S2*, S3* ou S4*. Après excitation, la molécule se neutraliserait par un transfert d'électron dans le cas du sel S1 ou par décomposition dans les cas des sels S2, S3 et S4.

Dans le cas du sel S1, une espèce radicalaire résulterait de la réaction (S1^{•}). De plus, une libération d'espèces acides HY (cas de S1) aurait lieu.

Dans le cas des sels S2, S3 et S4, après décomposition, on observe soit une libération de nouvelles espèces cationiques dans les cas de S2 et S3 en particulier, soit une libération d'espèces acides HY dans le cas de S4. En outre, le photoamorceur S3 relâche, en plus de l'espèce acide, du diazote N₂ gazeux. Les espèces acides HY ou cationiques libérées amorcent alors la polymérisation cationique par réaction avec ledit monomère réactif (a).

Selon un mode de réalisation, la polymérisation cationique est accélérée en présence d'au moins un photosensibilisateur radicalaire de type I ou II (c) ou encore par un ou plusieurs co-amorceurs (b) et/ou agent(s) régulateur de la vitesse de polymérisation (d) décrits ci-dessous. Le ou les agent(s) régulateur(s) de la vitesse de polymérisation (d) permet(tent) d'adapter le spectre d'absorption du photoamorceur choisi parmi S1, S2, S3 et S4, améliorant par exemple l'efficacité du photoamorceur sous rayonnement visible.

Selon un mode de réalisation, ledit agent régulateur de la vitesse de polymérisation (d) est par exemple une molécule de cyclodextrine, par exemple l'alpha, la beta ou la gamma-cyclodextrine, ou encore un éther couronne.

Selon un mode de réalisation, R₁ à R₆ sont choisis indépendamment les uns des autres parmi le ou les atomes, le ou les groupes suivants, seul(s) ou en combinaison, éventuellement agencé(s) en sorte de supporter une ou plusieurs charges positives: un atome d'hydrogène ; un groupe nitro -NO₂ ; un groupe cyano -CN ; un atome d'halogène ; un groupe alkyle en C₁-C₂₀, éventuellement substitué par un groupe hydroxyle ou un groupe carbonyle ; un groupe alcoxy; un groupe alkyle en C₁-C₂₀ substitué par une amine primaire ou secondaire ; un groupe aryle; un groupe hétéroaryle; un groupe cycloalkyle ; un groupe hétérocycloalkyle ; un groupe alkyle en C₁-C₂₀ substitué par au moins un groupe aryle; un groupe alcényle; un groupe alcynyle; un groupe acyle; un groupe aroyle ; un groupe alkoxy carbonyle; un groupe carbamyle; un groupe haloalkyle en C₁-C₂₀.

De préférence, R₁ à R₆ sont choisis indépendamment les uns des autres parmi le ou les atomes, le ou les groupes suivants, seul(s) ou en combinaison, éventuellement agencé(s) en sorte de supporter une ou plusieurs charges positives: un atome d'hydrogène ; un groupe alkyle en C₁-C₂₀, éventuellement substitué par un groupe hydroxyle ; un groupe alcoxy en C₁-C₁₀, éventuellement substitué par un groupe aryle en C₃-C₁₀, de préférence un groupe phényl, il s'agit par exemple d'un alkylphényléther ; le chlorobenzène ; un atome d'halogène ; un groupe aryle en C₃-C₂₀, tel qu'un groupe phényl (-C₆H₅), éventuellement substitué par un groupe hydroxyle et/ou une chaine alkyle éventuellement substituée par un groupe hydroxyle.

Encore de préférence, R₁ à R₆ sont choisis indépendamment les uns des autres parmi le ou les atomes, le ou les groupes suivants, seul(s) ou en combinaison : un atome d'hydrogène ; un groupe phényl C₆H₅ ; un groupe méthyl -CH₃ ; un groupe éthyl ; un groupe isopropyl ; un groupe n-propyl, un groupe n-butyl ; un groupe sec-butyl ; un groupe ter-butyl ; un groupe iso-butyl ; un groupe chlorobenzène (-C₆H₅Cl) ; un groupe alcoxyphenyl, tel que le groupe - (C₆H₅)OCH₃ ; un groupe phénol -C₆H₅(OH) ; un groupe phényl éventuellement substitué par un groupe hydroxyle et/ou une chaine alkyle éventuellement substituée par un groupe hydroxyle, tel que le groupe C₆H₅((CH₂)₂OH).

Au sens de la présente invention, on entend par « R₁ à R₆ sont choisis indépendamment les uns des autres parmi le ou les atomes, le ou les groupes suivants, seul(s) ou en combinaison » que le ou lesdits groupes et/ou le ou lesdits atomes peuvent être combinés ensemble.

Au sens de la présente invention, on entend par « agencés en sorte de supporter une ou plusieurs charges positives » que le ou lesdits atome(s) et/ou le ou lesdits groupe(s) peuvent comprendre une charge positive.

Les définitions indiquées ci-après s'appliquent au(x) sel(s) cationique(s) (e) mais également au(x) monomère(s) réactif(s) (a1,a2) et/ou au co-amorceur(s) (b), et/ou à l'agent ou aux agents de régulation de la vitesse de polymérisation (d).

Au sens de la présente invention, lorsqu'un groupe est en Cn-Cp (également décrit comme en Cn à Cp), cela signifie qu'il présente de n à p atomes de carbone, n et p étant des nombres entiers.

On entend par hétéroatome, tout atome autre qu'un atome de carbone et un atome d'hydrogène, et non métallique, notamment l'oxygène, le soufre, l'azote, le phosphore ou encore les halogènes.

On entend par atome d'halogène : le fluor, le chlore, le brome, l'iode et l'astate.

Au sens de la présente invention, on entend par groupe ou chaine (halo)alkyle tout groupe ou chaine alkyle saturé(e) ou non, linéaire ou ramifié(e), éventuellement substitué(e) par un ou plusieurs atomes d'halogène, de préférence en C₁-C₂₀, encore de préférence en C₁-C₁₅, encore plus préférentiellement en C₁-C₁₀, plus particulièrement en C₁-C₆, encore plus particulièrement en C₁-C₄, notamment en C₁-C₄.

Au sens de la présente invention, on entend par groupe alcoxy tout groupe de formule Rₐ-O dans lequel Rₐ représente un groupe alkyle saturé ou non linéaire ou ramifié, comportant éventuellement une fonction -OH, de préférence en C₁ à C₂₀, de préférence encore en C₁ à C₁₀, encore de préférence en C₁ à C₆, plus particulièrement en C₁ à C₄, tels que par exemple les groupes méthoxy, éthoxy, isopropoxy, n-propoxy, i-propoxy, n-butoxy, i-butoxy, sec-butoxy, tert-butoxy, n-pentoxy, et n-hexyloxy.

Au sens de la présente invention, on entend par groupe aryle un ou plusieurs cycle(s) aromatique(s), chacun desdits cycles étant en C₃ à C₂₀, de préférence en C₃ à C₁₀, plus particulièrement en C₃ à C₇, encore plus particulièrement en C₅ à C₇, pouvant être accolés ou fusionnés. Les dits cycles aromatique(s) peuvent être liés par une liaison éther -O-. En particulier, les groupes aryles peuvent être des groupes monocycliques ou bicycliques ou tricycliques ou tétracycliques ou pentacycliques ; par exemple un groupe phényl ou un groupe anthracène ou encore l'anthracénium, ou encore l'ion tropylium ; de préférence il s'agit du groupe phényle.

Le groupe aryle selon l'invention peut être aussi combiné avec un atome d'halogène, dans ce cas le groupe aryle est substitué par un atome d'halogène, il s'agit par exemple du chlorobenzene.

Au sens de la présente invention, on entend par groupe hétéroaryle un ou plusieurs cycles aromatiques en C₃ à C₂₀, de préférence chacun desdits cycles étant en C₃ à C₁₀, plus particulièrement en C₃ à C₆, dont un ou plusieurs atome(s) du ou des carbocycle(s) est/sont substitué(s) par un ou plusieurs hétéroatome(s), le ou lesdits carbocycle(s) pouvant être accolés ou fusionnés. Ledit groupe hétéroaryle est par exemple la pyridine. En particulier, lesdits groupes aryles peuvent être des groupes monocycliques ou bicycliques ou tricycliques ou tétracycliques ou pentacycliques.

Au sens de la présente invention, on entend par groupe cycloalkyle, un ou plusieurs groupe(s) alkyle(s) cyclique(s), éventuellement accolés ou fusionnés, chacun du ou desdits cycle(s) étant de préférence en C₃ à C₁₀, plus particulièrement en C₃ à C₇, par exemple le groupe cyclohexyl ou cyclopropyl ou cyclopentyl.

Au sens de la présente invention, on entend par groupe hétérocycloalkyle, un ou plusieurs groupe(s) alkyle(s) cyclique(s), éventuellement accolés ou fusionnés, dont un ou plusieurs atome(s) du ou des carbocycle(s) est/sont substitué(s) par un ou plusieurs hétéroatome(s), chacun du ou desdits hétérocycle(s) étant de préférence en C₃ à C₁₀, plus particulièrement en C₃ à C₇, par exemple le pyrane.

Le groupe aryle et/ou le groupe cycloalkyle et/ou le groupe hétérocycloalkyle et/ou le groupe hétéroaryle peuvent être combinés, éventuellement par l'intermédiaire d'un groupe tel que décrit dans le présent texte, par exemple un groupe alkyle ou par une fonction éther -O-, et/ou accolés ou fusionnés, par exemple il s'agit alors du thioxanthène ou du xanthène ou encore du thioxanthenium ou du xanthenium.

Au sens de la présente invention, on entend par groupe éther tout groupe de formule R_{d}-O-Rₑ ; par groupe ester tout groupe de formule R_{d}-(CO)-ORₑ; par groupe aldéhyde tout groupe de formule Rₑ- CHO; par groupe cétone tout groupe de formule R_{d}-(CO)-Rₑ ; par groupe acide carboxylique tout groupe de formule R_{d}-(CO)-OH ; par groupe urée tout groupe de formule (R_{d},Rₑ)N-(CO)-N (R_{f},R_{g}); par groupe carbamate tout groupe de formule (NR_{d}Rₑ)-(CO)-OR_{f} ; de préférence (NHR_{d})-(CO)-OR_{f}; par groupe anhydride carbonate tout groupe de formule R_{d}-O-(CO)-O-Rₑ (de préférence R_{d} et Rₑ sont différents d'un atome d'hydrogène) ; par groupe acétale tout groupe de formule R_{d}- CH(ORₑ)₂ ; par groupe thioether tout groupe de formule R_{d}-S-Rₑ; par groupe thioester tout groupe de formule R_{d}-CO-S-Rₑ; par groupe thiocarbonate tout groupe de formule R_{d}-O-CO-S-Rₑ; par groupe sulfoxyde tout groupe de formule R_{d}- (S=O)-Rₑ; par groupe sulfone tout groupe de formule R_{d}- S(=O)(=O)-Rₑ; par groupe phosphine tout groupe de formule PH₃ ; par groupe carbonate tout groupe de formule R_{b-}O-CO-OR_{c} ; par groupe orthoester tout groupe de formule R_{b}C(OR_{c-d-e})₃ ; par groupe oxyde de phosphine tout groupe de formule R_{d}-P(=O)(Rₑ)(R_{f}) ; par groupe alcényle, tout groupe de formule R_{d}RₑC = CR_{f}R_{g}; par amine primaire tout groupe de formule R_{b}NH₂; par amine secondaire tout groupe de formule R_{b}R_{c}NH ; par amine tertiaire tout groupe de formule R_{b}N R_{c}R_{d} ; par amide primaire tout groupe de formule R_{b}CONH₂, ou R_{b}CONHR_{c} ou R_{b}CONR_{c}R_{d}; par amide secondaire tout groupe de formule (R_{b}CO)₂NH ou (R_{b}CO)₂NR_{c}; par amide tertiaire tout groupe de formule (R_{b-c-d}CO)₃N ; par groupe acyle, tout groupe de formule RⱼC=O- ; par groupe carbamyle, tout groupe RₗCO(NH₂) ; par groupe carbonyle, tout groupe RₖRₗC=O.

R_{b}, R_{c}, R_{d}, Rₑ, R_{f}, R_{g}, Rⱼ, Rₖ, Rₗ, définis ci-dessus sont indépendamment les uns des autres : un atome d'hydrogène ; une chaine (halo)alkyle au sens de la présente invention; un groupe aryle ; un groupe hétéroaryle ; un groupe cycloalkyle ; un groupe hétérocycloalkyle ; une amine primaire ; une amine secondaire ; une amine tertiaire ; une amide primaire ; une amide secondaire ; une amide tertiaire ; un groupe thiol ; ou leur combinaison; de préférence un atome d'hydrogène ou une chaine alkyle. Par exemple, ledit groupe alcényle est un groupe vinyle.

Au sens de la présente invention, on entend par groupe alcynyle, tout groupe de formule RₕC ≡ CRᵢ dans lequel Rₕ et Rᵢ sont indépendamment, les uns des autres, un atome d'hydrogène ou une chaine alkyle, saturée ou non, linéaire ou ramifiée, de préférence en C₂ à C₂₀, encore de préférence en C₂ à C₁₀, plus particulièrement en C₂ à C₄,

Au sens de la présente invention, on entend par groupe aroyle tout groupe de formule -C₆H₅CORₖ dans lequel Rₖ est un hétéroatome, par exemple le chlore ou une chaine (halo)alkyle ou identique à R_{b} tel que défini ci-dessus.

Au sens de la présente invention, on entend par groupe hydroxyle, tout groupe -OH.

Au sens de la présente invention, lorsqu'un groupe ou un atome est substitué sur un cycle benzénique, ce dernier peut être substitué en ortho, en méta ou en para, notamment en para.

Par exemple, s'agissant du sel S4, les groupes R₁ et R₃ peuvent être fusionnés en un groupe aryle, le sel S4 est par exemple l'ion tropylium, R2 est alors un atome d'hydrogène.

S'agissant encore du sel S4, les groupes R₁, R₂ et R₃ peuvent être également des groupes phényl, chacun desdits groupes étant éventuellement substitué par un groupe alcoxy.

S'agissant encore du sel S4, les groupes R₂ et R₃ peuvent être un groupe hétéroaryle fusionné et accolé avec deux groupes phényl, le groupe R1 étant un groupe phényl, le sel s4 est par exemple l'ion anthracénium dont un atome de carbone du carbocycle central est substitué par l'oxygène et ledit carbocycle central est également substitué par un groupe phényl.

Le kit selon l'invention ou la composition polymérisable résultant du mélange des parties A et B est de préférence utilisé pour former un revêtement de protection dans le domaine ferroviaire ou dans le domaine automobile ou encore un revêtement protecteur, éventuellement chargé et/ou pigmenté en tant que film de peinture ou vernis.

Le kit selon l'invention ou la composition polymérisable résultant du mélange des parties A et B peut être également utilisé(e) en tant que matrice d'un matériau composite comprenant un renfort.

Dans un mode particulier, ledit renfort est ou comprend des fibres ou des fils considéré(e)s individuellement ou en combinaison, notamment mis en oeuvre par tissage, tricotage, tressage, et/ou des nontissés, et/ou des particules, notamment choisis parmi la famille de matériaux suivants : para-aramide, méta-aramide, fibres à base de silice, fibres de verre, polyéthylène-téréphtalate, polyéthylène haute densité, poly(p-phénylène-2,6- benzobisoxazole) (PBO), le carbone, le carbure de silicium, l'hydrate d'alumine, l'acier inoxydable, le gravier, le sable, les billes de verre, les billes d'aciers, la silice.

Lorsque le renfort est insuffisamment transparent au rayonnement ou insuffisamment irradié, par exemple s'agissant d'un renfort comprenant des fibres de carbone, le kit ou la composition comprenant les parties A et B réunies comprend également un co-amorceur qui va réagir avec le sel cationique (e), par exemple à température ambiante, pour que la réaction de polymérisation ait lieu dans toute l'épaisseur du matériau composite, cette dernière se propageant grâce à l'exothermie de la réaction entre le sel ou les sels et le ou les co-amorceur(s). Le matériau composite peut également être soumis à un rayonnement ou à un bombardement d'électrons afin qu'une photopolymérisation ait également lieu, en particulier en surface dudit matériau composite.

On entend au sens de la présente invention par température ambiante (T°C), la température de l'atelier de production ou du laboratoire dans lequel la réaction de polymérisation selon l'invention a lieu, généralement à une température comprise entre 10°C et 30°C, plus particulièrement sans apport de chaleur externe au mélange comprenant les parties A et B.

Dans une variante, le monomère réactif (a1), et éventuellement le monomère réactif (a2), est/sont choisi(s) ou compren(d)(nent) au moins un groupe choisi dans la liste constituée par : les éthers cycliques, en particulier les oxiranes, tels que l'oxyde d'éthylène ; les oxétanes, tels que l'oxyde de 1,3-propylène ; les oxolanes, tels que le tétrahydrofurane ; les oxanes, tels que le tétrahydropyrane ; les acétales cycliques, tels que les dioxanes, les trioxanes et les dioxolanes ; les amines cycliques, tels que les aziridines et les azetidines ; les iminoéthers cycliques, tels que les oxazolines ; les sulfides cycliques, tels que les thiéthanes et les thiiranes ; les vinyles, tels que les vinyles éthers et le vinylcarbazole ; les esters cycliques, tels que les lactones, les lactides, les carbonates cycliques et les orthoesters ; les amides cycliques, tels que les lactames ; les cycloalkyles substitués par au moins un atome de phosphore tels que les phosphazènes ; et les siloxanes cycliques ; de préférence dans le groupe constitué par les éthers cycliques.

De préférence, le monomère réactif (a1), et éventuellement le monomère réactif (a2), est/sont choisi(s) ou compren(d)(nent) au moins un groupe choisi dans la liste constituée par : les éthers cycliques, en particulier les oxiranes, tels que l'oxyde d'éthylène ; les oxétanes, tels que l'oxyde de 1,3-propylène ; les oxolanes, tels que le tétrahydrofurane ; les oxanes, tels que le tétrahydropyrane ; les vinyles, tels que les vinyles éthers et le vinylcarbazole.

De préférence, le monomère réactif (a1), et éventuellement le monomère réactif (a2), est/sont choisi(s) ou compren(d)(nent) au moins un groupe choisi dans la liste constituée par : les oxiranes, les oxétanes, les oxolanes et les oxanes.

De préférence, le monomère réactif (a1), et éventuellement le monomère réactif (a2), est/sont choisi(s) dans la liste constituée par : les époxys aliphatiques, les époxys aromatiques, les époxys cycloaliphatiques, et les oxétanes, ou leurs mélanges.

De préférence, le monomère réactif (a) est choisi dans la liste constituée par : Cyracure 6110 (DOW) ; Uvacure 1500 (CYTEC) ; Genomer 7210 (RAHN) ; CELLOXIDE 2021P (DÄICEL); S-100, S-32, VCHX, S-28, S-60, S-186 (SYNASIA) ; EPOLEAD GT401 (DÄICEL); Doublemer 4300 (DOUBLE BOND CHEMICAL) ; D.E.R 331 (HUNTSMAN) ; Epalloy 5000 (CVC) ; HBE 100 (Hermosets specialities HUNTSMAN) ; butyle glycidyle éther, huile de ricin glycidyle éther, 1,4-butanediol diglycidyle éther, diglycidyle-1,2-cyclohexane dicarboxylate (qui sont des époxy aliphatiques) ; le bis[4-(glycidyloxy)phényle]méthane (DGEBA), bis[4-(glycidyloxy)phényle] (DGBF), 1,2-epoxy-3-phenoxypropane, 4,4-méthylène bis(N,N-diglycidylaniline), resorcinol diglycidyle éther, styrène oxyde, phényle glycidyle éther (qui sont des époxys aromatiques); le cyclohexène oxyde, vinylcyclohexène oxyde, dicyclopentadiène dioxyde, 3,4-epoxycyclohexyl(3,4-epoxycyclohexanecarboxylate), triéthoxy[2-(7-oxabicyclo[4.1.0]hept-3-yl]silane, bis(3,4-epoxycyclohexyl)methyladipate (qui sont des époxy cycloaliphatiques); le bis(1-éthyl-3-oxétane-méthyl)éther, 3-éthyl-3-[(phénoxy)méthyle]oxétane, (3-éthyl-3-oxétane) méthanol, 3-ethyl-3-hydroxy-methyl-oxetane (Aron oxetane OXT-101), Bis[[1-ethyle(3-oxetanil)methyl]ether] (Aron oxetane OXT-221), 3-ethyl-3-[(2-ethyl-hexyloxy)methyl]oxetane] (Aron oxetane OXT-212) (qui sont dans la famille des oxétanes).

Dans une variante, le monomère réactif (a1), et éventuellement le monomère réactif (a2), est/sont choisi(s) ou compren(d)(nent) un groupe ((hétéro)cycloalkyle en C₃-C₂₀)n, avec 1 ≤ n ≤ 5, n étant un nombre entier, le ou lesdits (hétéro)cycloalkyle(s) étant saturé(s) ou non et comprenant dans au moins un cycle au moins une fonction ou un ou plusieurs atome(s) ou un groupe choisi(e) dans la liste constituée par : un groupe éther; un atome d'oxygène ; deux atomes d'oxygène ; trois atomes d'oxygène ; une amine primaire; une amine secondaire ; une amine tertiaire ; une amide primaire ; une amide secondaire ; une amide tertiaire ; un groupe ester ; un groupe carbonate; un groupe ortoester ; une fonction -O-Si-O ; une fonction vinyléther (-O-CH=CH₂) ; un atome d'halogène et un atome de soufre.

Dans une variante, le monomère réactif (a) est choisi parmi les époxys cycloaliphatiques, notamment les époxys dicycloaliphatiques.

Dans une variante, le monomère réactif (a1), et éventuellement le monomère réactif (a2), est/sont choisi(s) parmi les oxétanes, les époxy cycloaliphatique, ou leur mélange comprenant au moins un époxy et au moins un oxétane.

Dans une variante, le co-amorceur (b) est choisi dans ou comprend au moins un groupe choisi dans la liste II constituée par : le peroxyde d'hydrogène (H₂O₂) ; l'eau (H₂O) ; un groupe (halo)alkyle en C₁-C₂₀ substitué par un hydroperoxyde (-OOH) et/ou par un groupe thiol (-SH) ; un groupe aryl en C₁-C₂₀ substitué par un hydroperoxyde (-OOH) et/ou par un groupe thiol (-SH) ; un groupe hétéroaryle en C₁-C₂₀ substitué par un hydroperoxyde (-OOH) et/ou par un groupe thiol (-SH) ; un groupe cycloalkyle en C₁-C₂₀ substitué par un hydroperoxyde (-OOH) et/ou par un groupe thiol (-SH) ; un groupe hétérocycloalkyle en C₁-C₂₀ substitué par un hydroperoxyde (-OOH) et/ou par un groupe thiol (-SH) ; un groupe alcényle comprenant éventuellement au moins un groupe éther, tel que le vinyléther ; le ou lesdits groupes étant éventuellement substitué par un ou plusieurs groupes (-OH) ; et dans la liste III constituée par une amine primaire, une amine secondaire ; un groupe alkyle en C₁-C₂₀ comprenant une fonction -PH ou -PH₂ ; la phosphine PH₃; les sels métalliques et les sels organométalliques, tels que les sels du zinc ; ou leur combinaison.

De préférence, ledit au moins un co-amorceur est choisi parmi ou comprend ou moins un groupe choisi dans la liste II. Encore de préférence, le ou lesdits groupes lorsqu'il(s) est/sont substitué(s) par un groupe thiol (-SH), est/sont substitué(s) par au moins deux groupes thiols, plus préférentiellement au moins trois groupes thiols, particulièrement au moins quatre groupes thiols.

De préférence, ledit groupe alcényle comprenant un groupe éther précité a pour formule R_{z}-O-CH=CH₂, dans lequel le groupe R_{z} est choisi dans la liste constituée par : un atome d'hydrogène ; une chaine (halo)alkyle; un groupe aryle ; un groupe hétéroaryle ; un groupe cycloalkyle ; un groupe hétérocycloalkyle ; une amine primaire ; une amine secondaire ; une amine tertiaire ; une amide primaire ; une amide secondaire ; une amide tertiaire ; un groupe thiol ; un groupe alcynyle ; un groupe acyle ; un groupe aroyle ; un groupe carbamyle ; un groupe alcoxy ; ou leur combinaison.

On entend par sel métallique, tout sel exempt de partie organique, par exemple le CuBr₂.

On entend par sel organométallique, tout sel comprenant un ou plusieurs centres métalliques, lié(s) par liaison covalente à au moins une partie organique.

A l'exception des sels métalliques et des sels organométalliques, les co-amorceurs cités ci-dessus sont des espèces nucléophiles.

Il a été trouvé que les sels S1, S2, S3 et S4 en présence d'un co-amorceur peuvent amorcer une polymérisation cationique thermique (c'est-à-dire, en l'absence de rayonnement, par exemple en l'absence de lumière, et à faible température, par exemple à la température ambiante).

Cette disposition permet avantageusement d'utiliser les sels S1 et/ou S2 et/ou S3 et/ou S4 dans un système dual-cure combinant ainsi une photopolymérisation, notamment en surface du revêtement, et une polymérisation thermique, notamment au coeur et dans toute l'épaisseur du revêtement, avantageusement sans apport de chaleur externe au mélange comprenant les parties A et B.

Lesdits sels peuvent également être utilisés uniquement pour une polymérisation cationique par voie thermique seule en l'absence de rayonnement. Avantageusement, la polymérisation thermique se fait à température ambiante, en particulier entre 10°C et 30°C, sans qu'il ne soit nécessaire de chauffer la composition polymérisable comprenant les parties A et B mélangées.

Plusieurs mécanismes peuvent être mis en jeu selon la nature du co-amorceur :
Pour les espèces nucléophiles Nu :

   S⁺ _{1/2/3/4} Y⁻ + Nu => S _{1/2/3/4} - - Nu⁺ Y⁻ ou S _{1/2/3/4} - - Nu + HY

La réaction entre un sel cationique (e) en tant qu'amorceur et une espèce nucléophile (Nu) engendre une nouvelle espèce cationique intermédiaire. Cette nouvelle espèce cationique peut être stable ou instable. Dans ce dernier cas, une libération d'espèces acides HY a lieu. L'amorçage de la polymérisation thermique peut se faire soit par la nouvelle espèce cationique formée soit par l'espèce acide HY formée.

Pour les sels métalliques ou organométalliques Mt :

S⁺ _{1/2/3/4} Y⁻ + Mt = > S _{1/2/3/4}^{- +} Mt⁻¹ + HY

La réaction entre un sel cationique en tant qu'amorceur (e) avec le sel métallique forme un couple redox. Le sel métallique Mt réduit le sel cationique (e) pour devenir Mt⁻¹. Il s'agit d'un transfert d'un seul électron. Le sel cationique (e) se retrouve ainsi neutralisé.

Dans une variante, la partie A et/ou la partie B comprend(nnent) un agent régulateur de la vitesse de polymérisation (d) qui est ou comprend :
- un hétéroaryle en C₃-C₆ dont un atome au moins du carbocycle est l'azote, ledit hétérocycle étant substitué par : un ou plusieurs groupe(s) aryle(s) en C₃-C₆, tels qu'un groupe phényl, un groupe pyrane, un groupe furane ou un groupe thiophène; et/ou par une ou plusieurs chaines alkyles saturée(s) ou non, linéaire(s) ou ramifiée(s) en C₁ à C₁₀, de préférence en C₃ à C₆, par exemple l'isobutyle ;
- un groupe aryle en C₃-C₆ substitué par : une amine primaire, une amine secondaire ou amine tertiaire, de préférence une amine tertiaire; et/ou par un groupe aryle en C₃-C₆, tels qu'un groupe phényl, un groupe pyrane, un groupe furane ou un groupe thiophène; et/ou par une ou plusieurs chaines alkyles saturée(s) ou non, linéaire(s) ou ramifiée(s) en C₁ à C₁₀, de préférence une amine tertiaire tel qu'un groupe diméthylamine -N(CH₃)₂.

Ledit agent régulateur de la vitesse de polymérisation (d) peut réguler la vitesse de polymérisation selon les deux mécanismes suivants, en combinaison avec le sel cationique (e) :
- en régulant la vitesse de réaction entre le sel cationique (e) et le co-amorceur (b), ce qui revient à ajuster la vitesse d'amorçage. Le contrôle de la vitesse d'amorçage est alors effectué en complexant le sel cationique avec ledit agent régulateur de la vitesse de polymérisation (d). Il a ainsi été trouvé que la N, N- Diméthylaniline ou le N-vinyl carbazole peut agir en tant qu'agent régulateur (d) selon ce premier mécanisme. Une molécule de cyclodextrine peut également agir selon ce premier mécanisme ;
- en régulant la vitesse de propagation de la polymérisation. Dans ce cas, ledit agent régulateur de la vitesse de polymérisation (d) est de préférence un composé nucléophile ou basique qui interagit avec le centre de propagation. Il a été trouvé que la 2,6-Di-tert-butylpyridine ou la N,N-Dimethylaniline peut agir en tant qu'agent régulateur (d) selon ce second mécanisme. Les éthers couronnes connus de l'état de la technique peuvent également agir selon ce second mécanisme ainsi que les dérivés soufrés (tels que le DMSO et le thiophène).

De préférence, ledit agent régulateur de la vitesse de polymérisation est choisi parmi : la 2,6-Di-tert-butylpyridine, la N,N-Dimethylaniline, et le N-vinyl carbazole.

Dans une variante, le solvant est choisi parmi le propylène carbonate, le 1,4-dioxane et le diméthylsulfoxide, l'acétonitrile, l'acétone, le tétrahydrofurane, le dichlorométhane.

De préférence, le solvant a une polarité supérieure ou égale à 1.

Dans une variante, le sel cationique (e) selon l'invention est solubilisé dans au moins un monomère (a2) selon l'invention, éventuellement combiné avec un solvant.

Dans une variante, le photosensibilisateur (c) est choisi parmi les photoamorceurs radicalaires de type I, tels que la benzophénone ; et les photoamorceurs radicalaires de type II, tels que la thioxanthone, l'anthracène.

Les photoamorceurs radicalaires de type I sensibilisent le sel cationique (e) par transfert d'électrons.

Les photoamorceurs radicalaires de type II sensibilisent le sel cationique (e) par transfert d'électrons ou par transfert d'énergie.

Dans une variante, la proportion en poids de sel (e) par rapport au poids de la composition polymérisable finale comprenant les parties A et B est comprise entre 0,10% et 5%, de préférence entre 0,5% et 3%, encore de préférence entre 1% et 3%.

Dans une variante, la proportion en poids de monomère(s) (a1 et/ou a2) par rapport au poids de la composition polymérisable finale, comprenant les parties A et B, est comprise entre 80 % et 95 %.

Dans une variante, la proportion en poids de solvant par rapport au poids de la composition polymérisable finale comprenant les parties A et B est supérieure à 0% et inférieure ou égale à 20 %, de préférence entre 0,10 % et 10%.

Dans une variante, la proportion en poids du co-amorceur (b) par rapport au poids de la composition polymérisable finale comprenant les parties A et B est comprise entre 0,10% et 5%, de préférence comprise entre 0,5% et 3%, encore de préférence entre 1% et 3%.

La présente invention a pour objet, selon un second aspect, une composition polymérisable comprenant :
a. au moins un monomère réactif (a1) envers une espèce cationique ou une espèce acide de Lewis ou de Brönstedt tel(s) que défini(s) dans l'une quelconque des variantes de réalisation précédentes selon un premier aspect;
b. au moins un co-amorceur (b) tel(s) que défini(s) dans l'une quelconque des variantes de réalisation précédentes selon un premier aspect;
c. optionnellement un photosensiblisateur (c) tel(s) que défini(s) dans l'une quelconque des variantes de réalisation précédentes selon un premier aspect;
d. au moins un sel cationique (e) tel(s) que défini(s) dans l'une quelconque des variantes de réalisation précédentes selon un premier aspect; et
e. optionnellement un solvant tel(s) que défini(s) dans l'une quelconque des variantes de réalisation précédentes selon un premier aspect ; et
f. Optionnellement au moins un agent régulateur de la vitesse de polymérisation (d) tel(s) que défini(s) dans l'une quelconque des variantes de réalisation précédentes selon un premier aspect.

La présente invention a pour objet, selon un troisième aspect, un procédé de fabrication d'un revêtement ou d'un matériau composite mettant en oeuvre le kit décrit selon l'une quelconque des variantes de réalisation précédentes ou la composition polymérisable décrite ci-dessus, comprenant les étapes suivantes :
i) fourniture d'une partie A et d'une partie B définies selon l'une quelconque des variantes de réalisation précédentes en référence à un premier ou à un second aspect, et mélange des parties A et B pour la formation d'une composition polymérisable ; ou i") fourniture d'une composition polymérisable définie selon l'une quelconque des variantes de réalisation précédentes en référence à un premier ou à un second aspect ; et
ii) application de ladite composition polymérisable en une ou plusieurs couches sur un substrat ou imprégnation d'un renfort par ladite composition polymérisable ; et
iii) polymérisation dudit au moins un monomère (a1) sous l'effet d'un cation ou d'une espèce acide de Lewis ou de Bronsted formé par le sel (e) sous l'action dudit au moins un co-amorceur (b), sans apport de chaleur externe à ladite composition polymérisable, et optionnellement d'un rayonnement ou d'un bombardement électronique, pour la formation d'un revêtement ou d'un matériau composite.

Le procédé selon l'invention, permet en fonction de la composition polymérisable, par exemple qu'elle soit pigmentée et/ou chargée, de l'épaisseur de cette dernière appliquée sur le substrat ou de l'épaisseur et de la transparence du renfort, d'effectuer : 1/ une photopolymérisation seule sous l'effet du rayonnement ou du bombardement électronique agissant sur le sel cationique (e) ; 2/ une polymérisation thermique seule, en l'absence de rayonnement ou de bombardement sous l'effet du co-amorceur agissant sur le sel cationique (e) sans apport de chaleur externe à ladite composition polymérisable (la réaction entre le sel et le co-amorceur étant exothermique) et enfin de la combinaison d'une photopolymérisation et d'une polymérisation thermique 3/ résultant de la combinaison de 1/ et 2/ pour un système dual-cure au sens de la présente invention.

Avantageusement, ledit au moins un co-amorceur (b) est sélectionné en sorte d'être apte à réagir avec ledit au moins un sel cationique (e), sans apport de chaleur externe, dans une réaction exothermique, l'exothermie de la réaction contribuant à entretenir et amorcer la réaction de polymérisation cationique dudit au moins un monomère (a1,a2).

Avantageusement, l'application d'un rayonnement ou d'un bombardement d'électrons permet de contrôler la réaction de polymérisation, en particulier en accélérant la cinétique de la vitesse de polymérisation.

Ledit procédé permet d'irradier la composition polymérisable dès la fin de l'application ou du moulage et ainsi de durcir très rapidement la composition. Les zones peu soumises au rayonnement ou situées dans une zone d'ombre sont durcies parfaitement grâce à la réactivité thermique du système amorceur qui réagit même à faible température (ex : 20°C) (comparativement, le durcissement thermique des résines époxy est souvent réalisé via l'addition d'une amine ou par chauffage avec une mélamine).

Le procédé selon l'invention permet de polymériser la composition polymérisable sans apport de chaleur externe à ladite composition et donc d'obtenir une matrice thermodurcie, éventuellement renforcée, utilisable.

Selon un mode de réalisation, le procédé selon l'invention comprend une étape (iv) de post-traitement thermique appliquée à la composition polymérisable polymérisée obtenue à l'issue de l'étape (iii) afin d'organiser davantage les chaines polymères de la matrice thermodurcie.

De préférence, le post-traitement thermique comprend une étape de chauffage à une température supérieure ou égale à 60°C, encore de préférence inférieure ou égale à 100°C, pendant au moins 10 minutes, encore de préférence pendant au moins 60 minutes.

De préférence, la composition polymérisable est appliquée sous forme d'une couche ou de plusieurs couches, avec éventuellement l'application d'un rayonnement ou d'un bombardement d'électrons entre chaque couche et éventuellement à l'ensemble comprenant la ou lesdites couches superposées.

La ou les surface(s) de la ou desdites couches exposées éventuellement au rayonnement ou au bombardement d'électrons sont de préférence en contact avec l'oxygène de l'air. Avantageusement, l'oxygène de l'air n'inhibe par la réaction de polymérisation cationique en surface.

Dans une variante, l'étape iii) a lieu à une température comprise entre 10°C et 30°C, de préférence entre 15°C et 30°C, sans apport de chaleur externe à ladite composition polymérisable.

Dans une variante, ladite composition polymérisable étant transparente aux rayons ultraviolets ou aux rayons visibles, la polymérisation du monomère (a) intervient dans toute l'épaisseur de la composition, sous l'effet d'un rayonnement, en particulier à température ambiante (par exemple entre 20°C et 30°C) sans apport d'énergie thermique.

Dans une variante, ladite composition étant insuffisamment transparente aux rayons ultraviolets ou aux rayons visibles ou insuffisamment irradiée ou destinée à former un revêtement ayant une épaisseur supérieure à 1 mm ou présentant des zones d'ombre non irradiées, le co-amorceur (b) agissant sur l'amorceur ou sel cationique (e) va permettre, à température ambiante, la polymérisation de ladite composition dans toute son épaisseur en créant un polymère de même nature et via la même réaction de polymérisation cationique que la polymérisation photo-induite.

La présente invention a pour objet, selon un quatrième aspect, l'utilisation d'un sel cationique (e) défini selon l'une quelconque des variantes de réalisation précédentes en référence à un premier, second, ou troisième aspect, pour la polymérisation cationique d'au moins un monomère réactif (a1), éventuellement d'au moins un second monomère réactif (a2), défini(s) selon l'une quelconque des variantes de réalisation ci-dessus en référence à un premier, second, ou troisième aspect, en présence d'au moins un co-amorceur (b), notamment défini selon l'une quelconque des variantes de réalisation ci-dessus en référence à un premier, second, ou troisième aspect, éventuellement sous rayonnement ou bombardement d'électrons.

Dans une variante, le sel cationique (e) utilisé est le sel S1, et X est un atome d'oxygène.

### Description détaillé des figures

- la figure 1 représente le mécanisme de réaction entre un sel cationique (e) et une espèce cationique ou acide de Lewis ou de Bronsted ;
- les figures 2 et 3 représentent trois courbes thermométriques mesurées sur des exemples de compositions polymérisables selon l'invention ;
- les figures 4A, 4B et 4C représentent des exemples de sel cationique S4(1), S4(2) et S4(3) selon l'invention ; et
- les figures 5, 6, 7 et 8 représentent des courbes thermométriques mesurées sur des exemples de compositions polymérisables selon l'invention ;

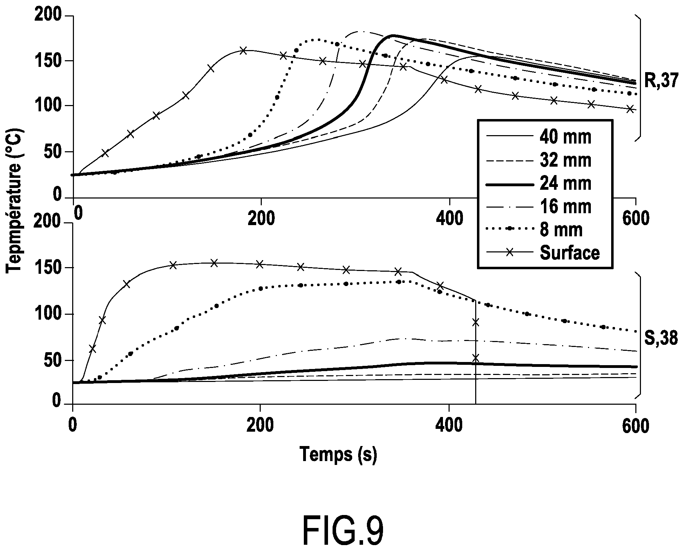

- la figure 9 représente un premier ensemble de courbes thermométriques mesurées à différentes épaisseurs dans une composition polymérisable selon l'invention et un second ensemble de courbes thermométriques mesurées à différentes épaisseurs dans une composition polymérisable témoin ;
- la figure 10 représente les valeurs de modules en flexion (GPa) (norme ISO 178 : 2010) obtenues pour des matrices industrielles, des matrices hautes performances et une matrice selon l'invention ;
- la figure 11 représente les valeurs de contraintes maximales obtenues en fonction du pourcentage de déformation (norme ISO 178 :2010) pour des matrices industrielles, des matrices hautes performances et une matrice selon l'invention.

### Description détaillée des exemples de réalisation

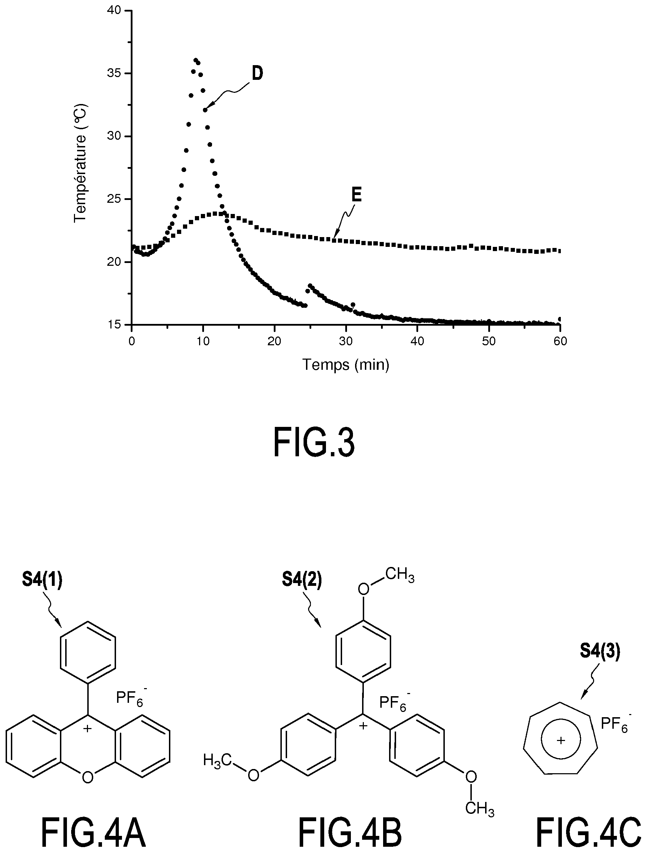

L'invention sera mieux comprise à la lecture des exemples de réalisation présentés ci-après cités à titre non limitatif. Les cinétiques de conversion des liaisons oxiranes ont été suivies grâce à la spectroscopie infrarouge à transformer de Fourier permettant un suivi en temps réel du processus de polymérisation. Listes des composés employés dans les compositions polymérisables décrites aux tableaux 1 à 4 ci-après et dans les paragraphes I à IV :
- monomère réactif (a) : epoxy dicycloaliphatique, en particulier le (3,4 epoxycyclohexane) méthyl 3,4 epoxycyclohexanecarboxylate (a1), tel que l'Uvacure 1500 ; (3,4 epoxycyclohexane) méthyl 3,4 epoxycyclohexanecarboxylate (a11), tel que l'UVACURE 6110 ; un monomère oxétane (OXT-101, 3- méthyl-3-oxétaneméthanol) (a111) ;
- sels cationiques (e) : sel cationique S1(1) pour lequel X : O ; R2, R4 et R6 : C6H5, R3 et R5 : H, Y=BF4⁻; sel cationique S1(2) pour lequel X : O, R2 et R4 et R6 : CH₃, R3 et R5 : H, Y=BF4⁻; sel cationique S1(3) pour lequel X : O, R2 et R4 et R6 : C₆H₅Cl, R3 et R5 : H, Y=BF4⁻; sel cationique S1(4) pour lequel X : O, R2 et R4 et R6 : C₆H₅OCH₃, R3 et R5 : H, Y=BF4⁻; sel cationique S1(5) pour lequel X : O, R2 : CH3, R4 et R6 : C6H5, R3 et R5 : H, Y=BF4⁻; sel cationique S1(6) pour lequel X : O, R2 et R6 : C6H5, R4 : CH3, R3 et R5 : H, Y=BF4⁻ ; sel cationique S1(7) pour lequel X : O, R2 et R6 : C6H5, R4 : C₆H₅OH, R3 et R5 : H, Y=BF4⁻ ; sel cationique S1(8) pour lequel X : O, R2 et R6 : C₆H₅, R4 : C₆H₅(CH₂)2OH, R3 et R5 : H, Y=BF4⁻; sel cationique S2(1) pour lequel R2, R4 et R6 : C₆H₅, R3 et R5 : H, Y: BF4⁻; sel cationique S3(1) pour lequel R2, R3, R5 et R6 : H, et R4 : Br, Y=BF4⁻; et les sels S4(1), S4(2) et S4(3) représentés à la figure 4. Les substituants sur les cycles benzéniques sont orientés en para. Chacun desdits sels (e), préalablement solubilisés à environ 25% en poids dans un solvant, en particulier le propylène carbonate, est présent à raison de 3% en poids par rapport au poids total de la composition polymérisable ;
- co-amorceurs (b) : peroxyde d'hydrogène (H₂O₂) (b1) ; isobutylvinyléther (b2) ; 4-mercaptophénol (b3) ;
- photosensibilisateur (c) : phénothiazine (c1).

### I - Différentes compositions polymérisables selon l'invention ont été soumises à un rayonnement, sans apport de chaleur externe auxdites compositions, (c'est-à-dire à température ambiante).

La proportion en poids de sel cationique par rapport au poids total de la composition polymérisable (ici de 1g) est de 3 %, que ce soit pour le sel s1(1), le sel s3(1) ou l'Irgacure 250 qui est un sel d'iodonium.

Les proportions en poids du co-amorceur (b1) et du co-amorceur (b2) par rapport au poids total de la composition polymérisable sont respectivement de 3% et de 1%.

La proportion en poids du photosensiblisateur (C1) par rapport au poids total de la composition polymérisable est de 1%.

La lampe d'irradiation est une lampe Hamamatsu Hg-Xe avec un réflecteur de 365 nm et une puissance 40 mW/cm². La composition polymérisable est appliquée sur un substrat, dans cet exemple, une pastille de KBr, sous forme d'une seule couche d'épaisseur 20 µm.

Les vitesses de polymérisation maximales (Rp) ainsi que les taux de conversions (x%) après 400 secondes d'irradiation sous lampe Hg-Xe obtenus sont regroupés dans le tableau 1 ci-dessous.

**Tableau 1**

| Exemples | (a) | (b) | (c) | (e) | Rp (mol.l⁻¹.s⁻¹) | Taux de conversion final (%) |
|---|---|---|---|---|---|---|
| 1 | (a1) | - | - | S1(1) | 0,19 | 75 |
| 2 | (a1) | - | (c1) | S1(1) | 0,11 | 100 |
| 3 | (a1) | (b1) | - | S1(1) | 0,38 | 93 |
| 4 | (a1) | (b2) | - | S1(1) | 0,29 | 87 |
| 5 | (a1) | - | - | S3(1) | 0,054 | 65 |
| 6 | (a1) | (b1) | - | S3(1) | 0,059 | 64 |
| 7 | (a1) | (b2) | - | S3(1) | 0,059 | 70 |
| 8 | (a1) | - | - | Irgacure 250 | 0,64 | 60 |

On peut remarquer la grande efficacité du sel S1(1) seul qui permet d'atteindre un taux de conversion de 75% environ, en moins de 400 secondes d'irradiation. Cette efficacité est accentuée par la présence d'un photosensibilisateur (c1) ou encore d'un co-amorceur (b1) ou (b2).

Le sel S3(1) est moins réactif sous rayonnement, néanmoins, il permet d'atteindre des taux de conversion supérieurs au taux de conversion du sel d'iodonium (Irgacure 250) après 400 s d'irradiation.

### II - Etude de l'impact de différentes structures de sels cationiques S1 selon l'invention sur la vitesse de polymérisation Rp et le taux de conversion final (%) en l'absence de co-amorceur (b), sans apport de chaleur externe auxdites compositions, (c'est-à-dire à température ambiante).

La proportion en poids de sel cationique par rapport au poids total de la composition polymérisable (ici de 1g) est de 3 %, que ce soit pour les sels s1(1) à S1(6), ou l'Irgacure 250 qui est un sel d'iodonium. La lampe d'irradiation est une lampe Hamamatsu Hg-Xe avec un réflecteur de 365 nm et une puissance 40 mW/cm².

La composition polymérisable est appliquée sur un substrat, dans cet exemple une pastille de KBr, sous forme d'une seule couche d'épaisseur 20 µm.

**Tableau 2**

| Exemples | (a) | (e) | Rp (mol.l⁻¹.s⁻¹) | Taux de conversion final (%) |
|---|---|---|---|---|
| 9 | (a1) | S1(1) | 0,19 | 75 |
| 10 | (a1) | S1(2) | 0,01 | 20 |
| 11 | (a1) | S1(3) | 0,23 | 57 |
| 12 | (a1) | S1(4) | 0,08 | 97 |
| 13 | (a1) | S1(5) | 0,01 | 11 |
| 14 | (a1) | S1(6) | 0,03 | 35 |
| 15 | (a1) | S1(7) | 0,04 | 89 |
| 8 | (a1) | Irgacure 250 | 0,64 | 60 |

### III - Mesures thermométriques effectuées sur différentes compositions polymérisables selon l'invention polymérisées en l'absence de rayonnement, lesdites compositions comprenant un co-amorceur (b), sans apport de chaleur externe auxdites compositions, (c'est-à-dire à température ambiante).

La proportion en poids de sel cationique par rapport au poids total de la composition polymérisable (ici de 1g) est de 3 %. Les proportions en poids des co-amorceurs (b1), (b2) et (b3) par rapport au poids total de la composition polymérisable sont respectivement de 1%, 3% et 3%.

La figure 2 représente trois courbes thermométriques obtenues à partir d'un thermocouple de type K plongé dans des compositions polymérisables référencées (A), (B) et (C) comprenant toutes au moins un monomère réactif (a1), un sel cationique s1(1) et un co-amorceur, respectivement (b1), (b2) et (b3). On observe ainsi d'après lesdites courbes qu'une polymérisation thermique efficace peut être obtenue accompagnée du dégagement d'une forte chaleur. La figure 3 représente deux courbes thermométriques obtenues à partir d'un thermocouple de type K plongé dans des compositions polymérisables référencées (D) et (E) comprenant chacune un monomère réactif (a1), un sel cationique s3(1) et un co-amorceur, respectivement (b1) et (b2).

On observe également une polymérisation thermique pour les exemples de compositions polymérisables (D) et (E) avec cependant une réaction exothermique beaucoup plus forte avec le co-amorceur (b1).

### IV - Mesures des temps de gel (min) sur des compositions Polymérisables comprenant différents sels cationiques selon l'invention Polymérisées en l'absence de rayonnement, sans apport de chaleur externe auxdites compositions, (c'est-à-dire à température ambiante), lesdites compositions polymérisables comprenant un co-amorceur (b).

Les temps de gel ont été calculés sur des courbes thermométriques obtenues telles que décrites ci-dessus au point III. Les temps de gel correspondent au maximum du pic exotherme de polymérisation.

Le tableau 3 ci-après reprend les temps de gel obtenus pour différents sels cationiques en combinaison avec différents co-amorceurs (b). La proportion en poids de sel cationique par rapport au poids total de la composition polymérisable (ici de 1g) est de 3 %, que ce soit pour le sel s1(1), le sel S2(1), le sel S3(1) ou les sels S4(1)(2)(3). Les proportions en poids du co-amorceur (b1) et du co-amorceur (b2) par rapport au poids total de la composition polymérisable sont respectivement de 1% et de 3%.

**Tableau 3**

| Exemples | (a) | (e) | (b) | Temps de gel (min) |
|---|---|---|---|---|
| 20 | (a1) | S1(1) | (b1) | 15 |
| 21 | (a1) | S1(1) | (b2) | 6 |
| 30 | (a1) | S1(3) | (b1) | 10 |
| 22 | (a1) | S2(1) | (b1) | 360 |
| 23 | (a1) | S2(1) | (b2) | >600 |
| 24 | (a1) | S3(1) | (b1) | 10 |
| 25 | (a1) | S3(1) | (b2) | 20 |
| 26 | (a1) | S4(1)(2)(3) | (b1) | Instantané |

La structure du co-amorceur (b) permet d'adapter la vitesse de polymérisation comme démontré dans le tableau 4 ci-dessous.

**Tableau 4**

| Exemples | (a) | (e) | (b) | Temps de gel (min) |
|---|---|---|---|---|
| 27 | (a1) | S1(1) | R-OOH dans lequel | 2 |
| | | | R : ClC₆H₅CO | |
| 28 | (a1) | S1(1) | R-OOH dans lequel | 6 |
| | | | R: CH₃CO | |
| 31 | (a1) | S1(1) | R_{z}-O-CH=CH₂ | 25 |
| | | | R_{z} : (CH₃)₂CH₂) | |
| 32 | (a1) | S1(1) | R_{z}-O-CH=CH₂ | 16 |
| | | | R_{z} : CH₃(CH₂)₂ | |
| 33 | (a1) | S1(1) | R_{z}-O-CH=CH₂ | 12 |
| | | | R_{z} : CH₃CH₂ | |
| 34 | (a1) | S1(1) | R_{z}-O-CH=CH₂ | 6 |
| | | | R_{z} : (CH₂)₂OH | |
| 35 | (a1) | S1(1) | R-OOH | 45 |
| | | | R: C₆H₅(C(CH₃)) | |
| 36 | (a1) | S1(1) | R-OOH | 45 |
| | | | R: (CH₃)₃C | |
| 29 | (a1) | S3(1) | R-OOH | >600 |
| | | | R : (CH₃)₃C | |

Des temps de gel ont été mesurés sur les compositions polymérisables des exemples 9 (S1(1)), 11 (S1(3)) et 12 (S1(4)) décrits ci-dessus au point I et comprenant chacune du peroxyde d'hydrogène en tant que co-amorceur (b1), en l'absence de rayonnement. Ces temps de gel sont : << 60 minutes, de l'ordre de 15 minutes, et de l'ordre de 12 minutes respectivement pour les exemples 9 (S1(1)), 11 (S1(3)) et 12 (S1(4)).

On remarque la grande efficacité du couple S1/ROOH (avec R=ClC₆H₅CO) ou -O-CH=CH₂.) Les temps de gel sont adaptables (quelques minutes à plusieurs heures) en jouant sur la nature du co-amorceur, sur la nature des substituants portés par ces co-amorceurs ainsi que sur la structure du sel cationique.

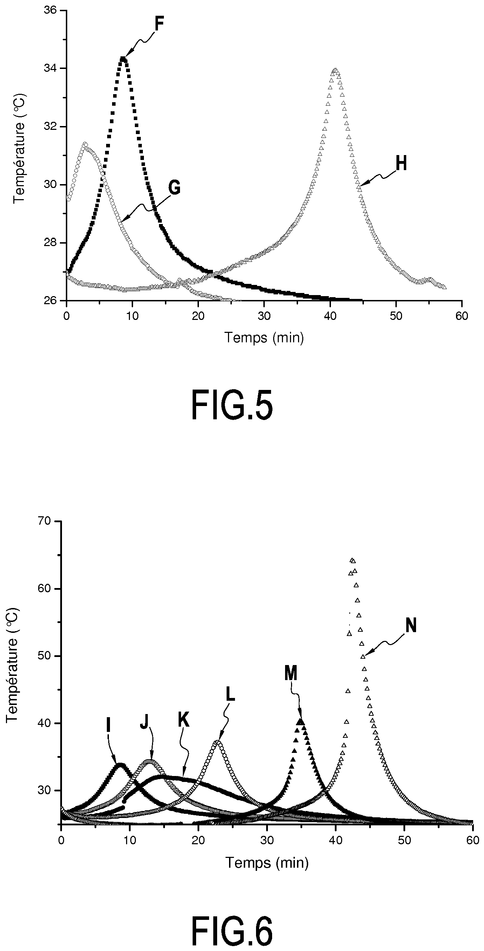

La figure 5 représente trois courbes thermométriques : la première courbe (F) correspond à l'exemple 20 ne comprenant pas d'agent régulateur de la vitesse de polymérisation (d) ; la seconde courbe (G) correspond à l'exemple 20 auquel 1% en poids de N-vinylcarbazole (d1) a été ajouté par rapport au poids total de la composition polymérisable ; la troisième courbe (H) correspond à l'exemple 20 auquel 1% en poids de N,N-diméthylaniline (d2) a été ajouté par rapport au poids total de la composition polymérisable. On remarque ainsi que, suite à l'ajout de (d1) ou (d2), les temps de gel sont décalés de presque 30 minutes. Il est ainsi possible de réguler la vitesse d'amorcage.

La figure 6 représente six courbes thermométriques : la première courbe (I) correspond à l'exemple 20 ne comprenant pas d'agent régulateur de la vitesse de polymérisation (d) ; les courbes (J), (K), (L), (M) et (N) correspondent à l'exemple 20 auquel respectivement 0,5%, 1%, 1,5%, 3% et 6% en poids de 2,6-di-ter-butylpyridine (d3) ont été ajoutés par rapport au poids total da la composition polymérisable.

On observe ainsi un décalage des temps de gel selon les proportions en agent (d3), avec un dégagement exothermique important lorsque la proportion en agent (d3) atteint 6% en poids.

### V - Polymérisation de résines époxy aromatiques ou aliphatiques comprenant un ou plusieurs groupes oxetanes en tant que monomère réactif (a1), sous rayonnement et combinées avec un co-amorceur (b) dans un système dual-cure, sans apport de chaleur externe auxdites compositions, (c'est-à-dire à température ambiante).

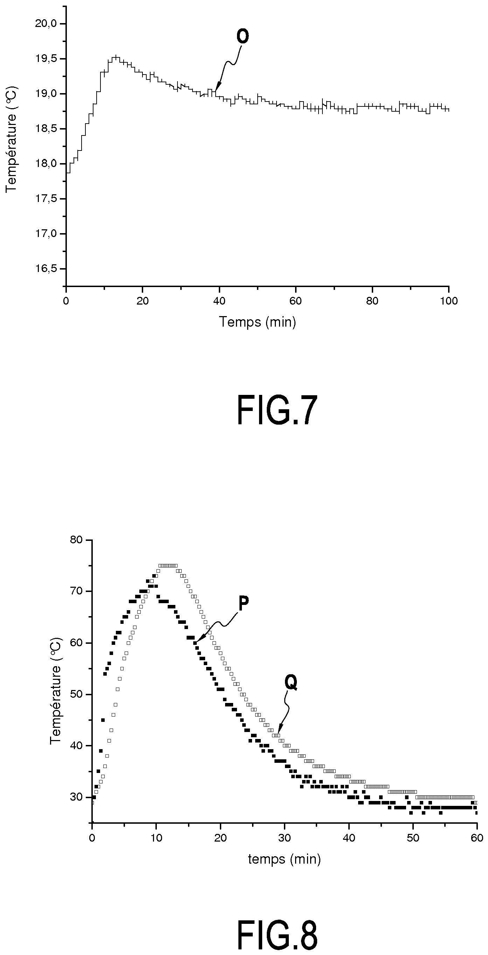

La figure 7 représente une courbe thermométrique (O) correspondant à une composition polymérisable comprenant du 1,2-époxy-3-phénoxypropane (commercialisé par SIGMA-ALDRICH) en tant que monomère réactif (a1), de l'isobutylvinyléther en tant que co-amorceur (b2), un sel cationique S1(1). On remarque que la réaction est peu exothermique.

Comparativement, la figure 8 représente deux courbes (P) et (Q) représentant les exothermes respectivement de surface et à coeur dans la couche à polymériser. La composition polymérisable mise en oeuvre sur la figure 8 correspond à l'exemple 21. On remarque un pic exotherme, de 70°C, nettement plus élevé que le pic exothermique représenté à la figure 7 et de l'ordre de 19,5°C.

La polymérisation cationique, sous rayonnement ou en thermique, c'est-à-dire à température ambiante, des résines époxy aromatiques ou aliphatiques est moins efficace que pour les résines époy cycloaliphatiques.

### VI - Photopolymérisation en épaisseur d'une composition polymérisable selon l'invention comparativement à une composition polymérisable témoin sous rayonnement et combinées avec un co-amorceur (b) dans un système dual-cure, sans apport de chaleur externe auxdites compositions, (c'est-à-dire à température ambiante).

La composition polymérisable selon l'invention (exemple 37) comprend un mélange de monomères : 92,5% de (a11) pour 7,5% de (a111) ; et un sel S1(1) et un co-amorceur (b2) respectivement à 3% et 1,5% en poids par rapport au poids total de la composition (ici de 5g), le reste étant formé du mélange monomères. La composition témoin (exemple 38) comprend le même mélange de monomères que l'exemple 37 ; et un sel Irgacure 250 et un co-amorceur (b2) respectivement à 3% et 1,5% en poids par rapport au poids total de la composition, le reste étant formé du mélange monomères.

La photopolymérisation en épaisseur a été suivie par thermométrie. Chaque composition polymérisable a été placée dans un tube à essais en matière plastique, préalablement perforé sur la longueur afin d'accueillir des thermocouples à des profondeurs déterminées sur le tube (en surface ; 8mm ; 16mm ; 24mm ; 32mm et 40 mm). L'irradiation du mélange de monomères se fait au niveau de l'ouverture du tube, laquelle est recouverte d'une plaque de verre, à l'aide d'une lampe (une lampe UV Hammamatsu avec réflecteur à 365 nm) disposée à une distance d'environ 2 cm au-dessus de la plaque de verre. La plaque de verre permet l'absorption des rayons infra-rouges produits par la lampe. De sorte que la température détectée par le thermocouple de surface sera issue uniquement de la réaction de photopolymérisation.

Le premier ensemble (R) de courbes thermométriques correspondant à la composition polymérisable selon l'invention (exemple 37) et le second ensemble de courbes thermométriques (S) correspondant à la composition polymérisable témoin (exemple 38) sont très différents.

Concernant l'exemple 38 (témoin), la température augmente rapidement en surface du fait de la réaction de photopolymérisation du mélange de monomères. La courbe associée au thermocouple situé à 8mm sous la surface suit assez rapidement le même profil que la courbe associé au thermocouple de surface. Les courbes associées aux thermocouples situés à plus de 8 mm sont très différentes puisque l'on constate que la température mesurée dans la composition polymérisable 38 baisse. Dans ce cas, la photopolymérisation en épaisseur se fait selon un processus de transfert thermique/diffusion, la chaleur générée en surface se propage peu dans l'épaisseur. La réticulation dans l'épaisseur (au-délà de 8 mm) est donc incomplète.

Concernant l'exemple 37 (composition selon l'invention), la température de surface augmente également rapidement pour les mêmes raisons qu'énoncées avec l'exemple 38. Néanmoins, le profil de la courbe associée au thermocouple de surface et les courbes associées aux autres thermocouples sont presque identiques sur toute l'épaisseur de la composition 37 (40 mm). Dans ce cas, la photopolymérisation en épaisseur se fait selon un front de polymérisation, évoluant du polymère, polymérisé et chaud, vers le mélange de monomères liquide donc non polymérisé et froid. Le fait que la température maximale soit la même pour toute l'épaisseur signifie que la composition polymérisable selon l'invention 37 apporte un auto-entretien du front de polymérisation, élément essentiel pour la photopolymérisation en épaisseur sans apport de chaleur externe.

### VII - Comparaison des propriétés mécaniques obtenues pour une composition polymérisable selon l'invention, exemple 39, (dont la composition correspond à l'exemple 21 décrit ci-dessus) comparativement à la moyenne des valeurs obtenues pour des compositions polymérisables témoins de l'état de la technique.

Le tableau 5 ci-dessous indique les noms commerciaux des compositions témoins de l'état de la technique (référence commerciale du monomère epoxy / référence commerciale du monomère amine), leurs cycles de mise en oeuvre ainsi que leurs applications.

**Tableau 5**

| Nom commercial | Cycles de mise en oeuvre | Application |
|---|---|---|
| DER 332/DEH 619 | 8 jours à température ambiante | Matrices industrielles |
| DER 331/DEH 2919 | 8 jours à température ambiante | |
| Epikote 05475/Epikure 05443 | 5 min à 120 °C | Matrices hautes performances |
| Araldite LY 5052/Aradur 5052 | 1jour à température ambiante suivie d'un post-traitement thermique de 4h à 100 °C | |
| | Ou 4h à 80°C | |
| Araldite MY 0816/Aradur 976-1 | 2h à 100 °C suivie de deux post-traitement thermiques : 2h à 150 °C et 2h à 220 °C | |
| Aralidte MY 0510/Aradur 976-1 | 2h à 150 °C suivie de deux post-traitement thermiques : 4h à 180 °C + 2h à 200 °C | |
| Araldite MY 720/Aradur 976-1 720/Aradur 976-1 | 2h à 80 suivie de trois post-traitement thermiques : 1h à 100 + 4h à 150 + 7h à 200 °C | |

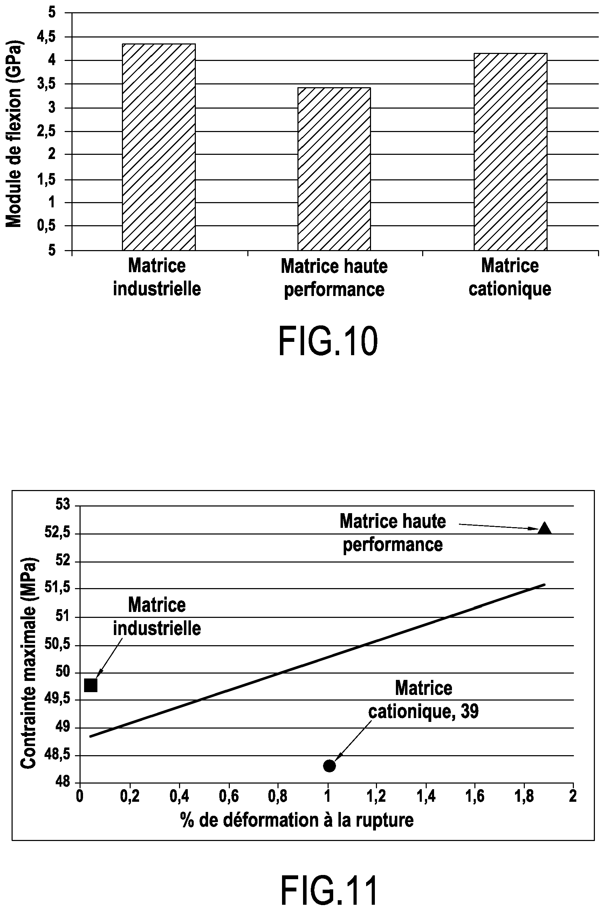

La composition polymérisable selon l'invention, exemple 39, (dont la composition correspond à l'exemple 21) est polymérisée pendant une journée à température ambiante sans apport de chaleur externe à la composition 39. Une étape de post-traitement thermique appliquée à la matrice thermodurcie afin de réorganiser les chaines polymères formées est effectuée pendant 4h à 100°C. Les moyennes des valeurs mesurées en modules en flexion (GPa) et en contraintes maximales (MPa) obtenues pour les matrices industrielles, les matrices hautes performances et la matrice issue de la polymérisation de la composition polymérisable 39 ont été reprises sur les figures 10 et 11 annexées à la présente. On peut ainsi constater que la matrice obtenue par polymérisation cationique de la composition 39 permet d'obtenir des performances mécaniques très satisfaisantes.

VIII - Comparaison des propriétés thermiques obtenues pour deux compositions polymérisables selon l'invention : exemple 39 précité (dont la composition correspond à l'exemple 21 décrit ci-dessus) et exemple 40 identique à l'exemple 39 à la différence qu'aucune étape de post-traitement thermique n'est effectuée, comparativement à des compositions polymérisables témoins de l'état de la technique décrites dans le tableau 5.

Le tableau 6 ci-après reprend les températures de transition vitreuse (Tg) déterminées par DMA (dynamical mechanical analysis) pour des compositions de l'état de la technique, correspondant à celles indiquées également dans le tableau 5 et ayant subies les cycles de mise en oeuvre décrits au tableau 5 ainsi que pour des compositions selon l'invention (exemples 39 et 40). Ce tableau 6 reprend également les températures de décompositions (Td) déterminées par TGA (thermogravimétric analysis) pour une composition de l'état de la technique correspondant à celle indiquée également dans le tableau 5 et ayant subie le cycle de mise en oeuvre décrit au tableau 5, et pour une composition selon l'invention correspondant à l'exemple 40.

**Tableau 6**

| Références des compositions polymérisables | Tg (°C) |
|---|---|
| DER 332/DEH 619 | 77°C |
| Araldite CY 179/Aradur 917 | 189°C |
| Epikote/Epikure | 127°C |
| Aralidte LY 5052/Aradur 5052 | 126°C |
| Araldite MY 0510/Aradure 976-1 | 191°C |
| Exemple 39 | 160-200°C |
| Exemple 40 | 125°C |
| | Td (°C) |
| Araldite CY 179/Aradur 917 | 372°C |
| Exemple 40 | 404°C |

Avantageusement, les compositions polymérisables selon l'invention permettent d'obtenir des Tg et des Td semblables, voire supérieures, aux compositions de l'état de la technique.

## Revendications

1. Kit pour composition polymérisable, ledit kit comprenant :
I. une partie A constituée par une composition comprenant au moins un monomère réactif (a1) envers une espèce cationique ou une espèce acide de Lewis ou de Brönsted, et au moins un co-amorceur (b) ;
II. une partie B comprenant, optionnellement un solvant et/ou au moins un monomère réactif (a2) envers une espèce cationique ou une espèce acide de Lewis ou de Brönsted, et au moins un sel cationique (e) choisi parmi les sels de formule s1, s3 et s4 ci-dessous, 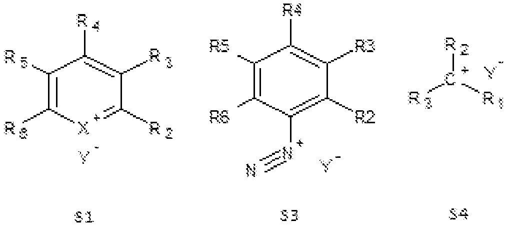
dans lesquelles X représente un atome de carbone ou un hétéroatome chargé positivement différent de l'azote; Y représente une ou plusieurs espèce(s) anionique(s) stabilisante(s) de l'espèce cationique du sel S1 ou S3 ou S4, en particulier comprenant au moins une espèce anionique choisie seule ou en combinaison parmi Br⁻, Cl⁻, BF₄⁻, PF₆⁻, AsF₆⁻, AnF₆⁻, SbF₆⁻, SnF₆⁻, ClO₄⁻, les sulfonates; R₁ à R₆ sont choisis indépendamment les uns des autres parmi le ou les atomes, le ou les groupes suivants, seul(s) ou en combinaison, éventuellement agencés en sorte de supporter une ou plusieurs charges positives: un atome d'hydrogène ; un groupe nitro -NO₂ ; un groupe cyano -CN ; un atome d'halogène ; un groupe alkyle en C₁-C₂₀, éventuellement substitué par un ou plusieurs groupe(s) ou un ou plusieurs atome(s) choisi(s) indépendamment dans la liste I comprenant les groupes ou atome suivants : hydroxyle; carbonyle, alcènyle, aryle, hétéroaryle, éther, ester, aldéhyde, cétone, acide carboxylique, un atome d'halogène, amine primaire, amine secondaire, amine tertaire, amide primaire, amine secondaire, amine tertiaire, urée, thioester, thiocarbonate, sulfoxyde, sulfone, phosphine, phosphorane, oxyde de phosphine, cycloalkyle, hétérocycloalkyle, ou leur combinaison; un groupe alcoxy en C₁-C₂₀, éventuellement substitué par un groupe alkyle en C₁-C₂₀ et/ou un ou plusieurs groupe(s) ou un ou plusieurs atome(s) choisi(s) indifféremment dans la liste I ; un groupe aryle; un groupe hétéroaryle; un groupe cycloalkyle ; un groupe hétérocycloalkyle ; le ou ledits groupes (hétéro)aryle(s) et/ou le ou lesdits groupes (hétéro)cycloalkyles étant éventuellement substitué par un ou plusieurs groupe(s) choisi(s) indépendamment dans la liste I ; un groupe acyle; un groupe aroyle ; un groupe alcoxy carbonyle; un groupe carbamyle ; et optionnellement un photosensibilisateur (c) qui est indifféremment dans la partie A et/ou la partie B.

2. Kit selon la revendication 1, **caractérisé en ce que** le monomère réactif (a1), et éventuellement le monomère réactif (a2), est/sont choisi(s) ou compren(d)(nent) au moins un groupe choisi dans la liste constituée par : les éthers cycliques, en particulier les oxiranes; les oxétanes; les oxolanes; les oxanes; les acétales cycliques; les amines cycliques; les iminoéthers cycliques ; les sulfides cycliques; les vinyles; les esters cycliques; les amides cycliques; les cycloalkyles substitués par au moins un atome de phosphore; et les siloxanes cycliques..

3. Kit selon l'une ou l'autre des revendications 1 et 2, **caractérisé en ce que** le le monomère (a1), et éventuellement le monomère (a2), est/sont ou compren(d)(nent) un groupe ((hétéro)cycloalkyle en C₃-C₂₀)n, avec 1 ≤ n ≤ 5, n étant un nombre entier, le ou lesdits (hétéro)cycloalkyle(s) étant saturé(s) ou non et comprenant dans au moins un cycle au moins une fonction ou un ou plusieurs atome(s) ou un groupe choisi(e) dans la liste constituée par : un groupe éther; un atome d'oxygène ; deux atomes d'oxygène ; trois atomes d'oxygène ; une amine primaire; une amine secondaire ; une amine tertiaire ; une amide primaire ; une amide secondaire ; une amide tertiaire ; un groupe ester ; un groupe carbonate; un groupe ortoester ; une fonction -O-Si-O ; une fonction vinyléther (-O-CH=CH₂) ; un atome d'halogène et un atome de soufre.

4. Kit selon l'une quelconque des revendications 1 à 3, **caractérisé en ce que** le monomère réactif (a1), et éventuellement le monomère réactif (a2), est/sont choisi(s) parmi les époxys cycloaliphatiques, notamment les époxys dicycloaliphatiques, les oxétanes, ou leur mélange.

5. Kit selon l'une quelconque des revendications 1 à 4, **caractérisé en ce que** le co-amorceur (b) est choisi dans ou comprend au moins un groupe choisi dans la liste II constituée par : le peroxyde d'hydrogène (H₂O₂) ; l'eau (H₂O) ; un groupe (halo)alkyle en C₁-C₂₀ substitué par un hydroperoxyde (-OOH) et/ou par un groupe thiol (-SH) ; un groupe aryl en C₁-C₂₀ substitué par un hydroperoxyde (-OOH) et/ou par un groupe thiol (-SH) ; un groupe hétéroaryle en C₁-C₂₀ substitué par un hydroperoxyde (-OOH) et/ou par un groupe thiol (-SH) ; un groupe cycloalkyle en C₁-C₂₀ substitué par un hydroperoxyde (-OOH) et/ou par un groupe thiol (-SH) ; un groupe hétérocycloalkyle en C₁-C₂₀ substitué par un hydroperoxyde (-OOH) et/ou par un groupe thiol (-SH) ; un groupe alcènyle comprenant éventuellement au moins un groupe éther; le ou lesdits groupes étant éventuellement substitué par un ou plusieurs groupes (-OH).

6. Kit selon l'une quelconque des revendications 1 à 5, **caractérisé en ce que** la partie A et/ou la partie B compre(nd)(nnent) un agent régulateur de la vitesse de polymérisation (d) qui est ou comprend :
- un hétéroaryle en C₃-C₆ dont un atome au moins du carbocycle est l'azote, ledit hétérocycle étant substitué par : un ou plusieurs groupe(s) aryle(s) en C₃-C₆, tels qu'un groupe phényl, un groupe pyrane, un groupe furane ou un groupe thiophène; et/ou par une ou plusieurs chaines alkyles saturée(s) ou non, linéaire(s) ou ramifiée(s) en C₁ à C₁₀ ;
- un groupe aryle en C₃-C₆ substitué par : une amine primaire, une amine secondaire, une amine tertiaire; et/ou par un groupe aryle en C₃-C₆; et/ou par une ou plusieurs chaines alkyles saturée(s) ou non, linéaire(s) ou ramifiée(s) en C₁ à C₁₀.

7. Kit selon l'une quelconque des revendications 1 à 6, **caractérisé en ce que** la proportion en poids de sel (e) par rapport au poids de la composition polymérisable finale comprenant les partie A et B est comprise entre 0,10% et 5%, de préférence entre 0,5% et 3%.

8. Kit selon l'une quelconque des revendications 1 à 7, **caractérisé en ce que** la proportion en poids du co-amorceur (b) par rapport au poids de la composition polymérisable finale comprenant les parties A et B est comprise entre 0,10% et 5%, de préférence comprise entre 0,5% et 3%.

9. Composition polymérisable comprenant :
- au moins un monomère réactif (a1) envers une espèce cationique ou une espèce acide de Lewis ou de Brönstedt, notamment défini selon l'une quelconque des revendications 2 à 4 ;
- au moins un co-amorceur (b), notamment défini selon l'une ou l'autre des revendications 5 et 8 ;
- optionnellement au moins un photosensiblisateur (c) ;
- au moins un sel cationique (e) défini selon la revendication 1 ; et
- optionnellement au moins un solvant et/ou au moins un monomère réactif (a2) envers une espèce cationique ou une espèce acide de Lewis ou de Brönstedt, notamment défini selon l'une quelconque des revendications 2 à 4;
- optionnellement au moins un agent régulateur de la vitesse de polymérisation (d), notamment défini selon la revendication 6.

10. Procédé de fabrication d'un revêtement ou d'un matériau composite, comprenant les étapes suivantes :
(i) fourniture d'une partie A constituée par une composition comprenant au moins un monomère réactif (a1) envers une espèce cationique ou une espèce acide de Lewis ou de Brönsted, et au moins un co-amorceur (b) ; et d'une partie B comprenant, optionnellement un solvant et/ou au moins un monomère réactif (a2) envers une espèce cationique ou une espèce acide de Lewis ou de Brönsted, et au moins un sel cationique (e) choisi parmi les sels de formule s1, s2, s3 et s4 ci-dessous, 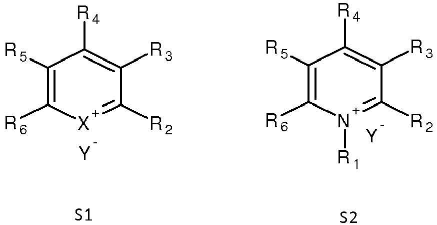 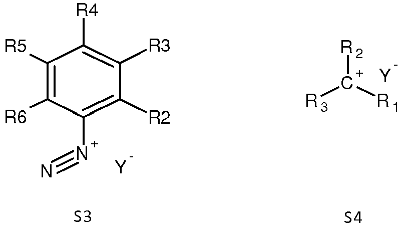 dans lesquelles X représente un atome de carbone ou un hétéroatome chargé positivement différent de l'azote ; Y représente une ou plusieurs espèce(s) anionique(s) stabilisante(s) de l'espèce cationique du sel S1 ou S2 ou S3 ou S4, en particulier comprenant au moins une espèce anionique choisie seule ou en combinaison parmi Br⁻, Cl⁻, BF₄⁻, PF₆⁻, AsF₆⁻, AnF₆⁻, SbF₆⁻, SnF₆⁻, ClO₄⁻, les sulfonates ; R₁ à R₆ sont choisis indépendamment les uns des autres parmi le ou les atomes, le ou les groupes suivants, seul(s) ou en combinaison, éventuellement agencés en sorte de supporter une ou plusieurs charges positives: un atome d'hydrogène ; un groupe nitro -NO₂ ; un groupe cyano -CN ; un atome d'halogène ; un groupe alkyle en C₁-C₂₀, éventuellement substitué par un ou plusieurs groupe(s) ou un ou plusieurs atome(s) choisi(s) indépendamment dans la liste I comprenant les groupes ou atome suivants : hydroxyle; carbonyle, alcènyle, aryle, hétéroaryle, éther, ester, aldéhyde, cétone, acide carboxylique, un atome d'halogène, amine primaire, amine secondaire, amine tertaire, amide primaire, amine secondaire, amine tertiaire, urée, thioester, thiocarbonate, sulfoxyde, sulfone, phosphine, phosphorane, oxyde de phosphine, cycloalkyle, hétérocycloalkyle, ou leur combinaison; un groupe alcoxy en C₁-C₂₀, éventuellement substitué par un groupe alkyle en C₁-C₂₀ et/ou un ou plusieurs groupe(s) ou un ou plusieurs atome(s) choisi(s) indifféremment dans la liste I ; un groupe aryle; un groupe hétéroaryle; un groupe cycloalkyle ; un groupe hétérocycloalkyle ; le ou ledits groupes (hétéro)aryle(s) et/ou le ou lesdits groupes (hétéro)cycloalkyles étant éventuellement substitué par un ou plusieurs groupe(s) choisi(s) indépendamment dans la liste I ; un groupe acyle; un groupe aroyle ; un groupe alcoxy carbonyle; un groupe carbamyle; et optionnellement un photosensibilisateur (c) qui est indifféremment dans la partie A et/ou la partie B ; et le mélange des parties A et B pour la formation d'une composition polymérisable ; ou
(i") fourniture d'une composition polymérisable comprenant ledit au moins un monomère (a1), ledit au moins co-amorceur (b), ledit au moins un sel cationique (e), et optionnellement ledit photosensibilisateur (c), définis au paragraphe (i) ; et
(ii) application de ladite composition polymérisable en une ou plusieurs couches sur un substrat ou imprégnation d'un renfort par ladite composition polymérisable ; et
(iii) polymérisation dudit au moins un monomère (a1) sous l'effet d'un cation ou d'une espèce acide de Lewis ou de Bronsted formé par le sel (e) sous l'action dudit au moins un co-amorceur (b), sans apport de chaleur externe à ladite composition polymérisable, et optionnellement sous l'action d'un rayonnement ou d'un bombardement électronique, pour la formation d'un revêtement ou d'un matériau composite.

11. Procédé selon la revendication 10, **caractérisé en ce que** l'étape iii) a lieu à une température comprise entre 10 °C et 30°C.

12. Utilisation d'un sel cationique (e) défini selon la revendication 1 pour la polymérisation cationique d'au moins un monomère réactif (a1) défini selon l'une quelconque des revendications 1 à 4 en présence d'au moins un co-amorceur (b), notamment défini selon l'une ou l'autre des revendications 5 et 8, éventuellement sous rayonnement ou bombardement d'électrons.

13. Utilisation d'un sel cationique (e) selon la revendication 12, dans laquelle le sel cationique (e) est le sel S1, et X est un atome d'oxygène.

## Patentansprüche

1. Kit für eine polymerisierbare Zusammensetzung, wobei das Kit umfasst:
I. einen Teil A, der aus einer Zusammensetzung besteht, die mindestens ein reaktives Monomer (a1) gegenüber einer kationischen Spezies oder einer sauren Spezies nach Lewis oder Brönsted und mindestens einen Co-Initiator (b) umfasst,
II. einen Teil B, der optional ein Lösungsmittel und/oder mindestens ein reaktives Monomer (a2) gegenüber einer kationischen Spezies oder einer sauren Spezies nach Lewis oder Brönsted und mindestens ein kationisches Salz (e), ausgewählt aus den Salzen der nachstehenden Formeln s1, s3 und s4, enthält, 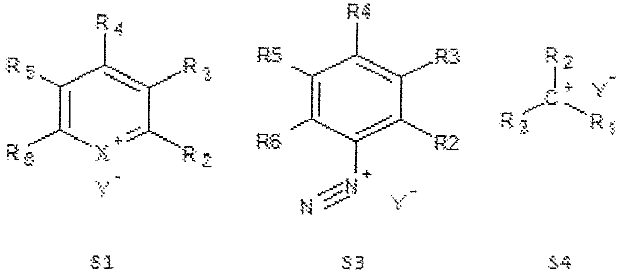
wobei X ein Kohlenstoffatom oder ein positiv geladenes Heteroatom darstellt: Stickstoff, Y eine oder mehrere stabilisierende anionische Spezies der kationischen Spezies des Salzes S1 oder S3 oder S4 darstellt, insbesondere umfassend mindestens eine anionische Spezies, einzeln oder in Kombination ausgewählt aus Br⁻, Cl⁻, BF₄⁻, PF₆⁻, AsF₆⁻, AnF₆⁻, SbF₆⁻, SnF₆⁻, ClO₄⁻, Sulfonaten, R₁ bis R₆ unabhängig voneinander aus dem oder den folgenden Atom(en) und der oder den folgenden Gruppe(n) einzeln oder in Kombination ausgewählt werden und gegebenenfalls so angeordnet sind, dass sie eine oder mehrere positive Ladungen tragen: ein Wasserstoffatom, eine Nitro-NO₂-Gruppe, eine Cyano-CN-Gruppe, ein Halogenatom, eine C₁-C₂₀-Alkylgruppe, die gegebenenfalls durch eine oder mehrere Gruppe(n) oder ein oder mehrere Atom(e) substituiert ist, die (das) unabhängig aus der Liste I ausgewählt ist (sind), die die folgenden Gruppen oder Atome umfasst:
Hydroxyl, Carbonyl, Alkenyl, Aryl, Heteroaryl, Ether, Ester, Aldehyd, Keton, Carbonsäure, ein Halogenatom, primäres Amin, sekundäres Amin, tertiäres Amin, primäres Amid, sekundäres Amin, tertiäres Amin, Harnstoff, Thioester, Thiocarbonat, Sulfoxid, Sulfon, Phosphin, Phosphoran, Phosphinoxid, Cycloalkyl, Heterocycloalkyl oder eine Kombination davon, eine C₁-C₂₀-Alkoxygruppe, die gegebenenfalls durch eine C₁-C₂₀-Alkylgruppe und/oder eine oder mehrere Gruppe(n) oder ein oder mehrere Atom(e) substituiert ist, die aus der Liste I beliebig ausgewählt wird (werden), eine Arylgruppe, eine Heteroarylgruppe, eine Cycloalkylgruppe, eine Heterocycloalkylgruppe, wobei die genannte(n) (Hetero)Arylgruppe(n) und/oder die genannte(n) (Hetero)Cycloalkylgruppe(n) gegebenenfalls durch eine oder mehrere Gruppe(n) substituiert ist (sind), die unabhängig voneinander aus der Liste I ausgewählt wird (werden), eine Acylgruppe, eine Aroylgruppe, eine Carbonylalkoxygruppe, eine Carbamylgruppe, und gegebenenfalls ein Photosensibilisator (c), der beliebig in Teil A und/oder Teil B enthalten ist.

2. Kit gemäß Anspruch 1, **dadurch gekennzeichnet, dass** das reaktive Monomer (a1) und gegebenenfalls das reaktive Monomer (a2) aus der folgenden Liste ausgewählt ist (sind) oder mindestens eine Gruppe aus dieser Liste umfasst, wobei die Liste besteht aus: zyklischen Ethern, insbesondere Oxiranen, Oxetanen, Oxolanen, Oxanen, zyklischen Acetalen, zyklischen Aminen, zyklischen Iminoethern, zyklischen Sulfiden, Vinyl, zyklischen Estern, zyklischen Amiden, Cycloalkylen, die durch mindestens ein Phosphoratom substituiert sind, und zyklischen Siloxanen.

3. Kit gemäß einem der Ansprüche 1 und 2, **dadurch gekennzeichnet, dass** das Monomer (a1) und gegebenenfalls das Monomer (a2) eine Gruppe (C₃-C₂₀-(Hetero)-Cycloalkyl) n ist/sind bzw. umfasst/umfassen, mit 1 ≤ n ≤ 5, wobei n eine ganze Zahl ist, wobei das oder die (Hetero)Cycloalkyl(e) gesättigt oder ungesättigt ist (sind) und in mindestens einem Ring mindestens eine Funktion oder ein oder mehrere Atom(e) oder eine Gruppe enthalten ist (sind), ausgewählt aus der Liste, bestehend aus: einer Ethergruppe, einem Sauerstoffatom, zwei Sauerstoffatomen, drei Sauerstoffatomen, einem primären Amin, einem sekundären Amin, einem tertiären Amin, einem primären Amid, einem sekundären Amid, einem tertiären Amid, einer Estergruppe, einer Carbonatgruppe, einer Orthoestergruppe, einer -O-Si-O-Funktion, einer Vinylether-(-O-CH=CH₂)-Funktion, einem Halogenatom und einem Schwefelatom.

4. Kit gemäß irgendeinem der Ansprüche 1 bis 3, **dadurch gekennzeichnet, dass** das reaktive Monomer (a1) und gegebenenfalls das reaktive Monomer (a2) aus cycloaliphatischen Epoxys, insbesondere dicycloaliphatischen Epoxys, Oxetanen oder deren Mischung ausgewählt ist/sind.

5. Kit gemäß einem der Ansprüche 1 bis 4, **dadurch gekennzeichnet, dass** der Co-Initiator (b) aus der Liste II ausgewählt ist oder mindestens eine aus dieser ausgewählte Gruppe umfasst, wobei diese Liste besteht aus: Wasserstoffperoxid (H₂O₂), Wasser (H₂O), einer C₁-C₂₀-Alkyl-(Halogen)alkylgruppe, die durch Hydroperoxid (-OOH) und/oder eine Thiol-(-SH)-Gruppe substituiert ist, einer C₁-C₂₀-Arylgruppe, die mit Hydroperoxid (-OOH) und/oder Thiol (-SH) substituiert ist, einer C₁-C₂₀-Heteroarylgruppe, die mit Hydroperoxid (-OOH) und/oder Thiol (-SH) substituiert ist, einer C₁-C₂₀-Cycloalkylgruppe, die mit Hydroperoxid (-OOH) und/oder Thiol (-SH) substituiert ist, einer C₁-C₂₀-Heterocycloalkylgruppe, die mit Hydroperoxid (-OOH) und/oder einer C1-C20-Heterocycloalkylgruppe substituiert ist, einer Alkenylgruppe, die gegebenenfalls mindestens eine Ethergruppe umfasst, wobei die Gruppe oder die Gruppen gegebenenfalls durch eine oder mehrere (-OH)-Gruppen substituiert ist bzw. sind.

6. Kit gemäß einem der Ansprüche 1 bis 5, **dadurch gekennzeichnet, dass** der Teil A und/oder der Teil B ein die Polymerisationsgeschwindigkeit regulierendes Mittel (d) umfasst (umfassen), das folgendes ist oder umfasst:
- ein C₃-C₆-Heteroaryl, bei dem mindestens ein Atom des Carbocyclus Stickstoff ist, wobei der Heterocyclus substituiert ist durch: eine oder mehrere C₃-C₆-Arylgruppe(n), wie eine Phenylgruppe, eine Pyrangruppe, eine Furangruppe oder eine Thiophengruppe, und/oder durch eine oder mehrere gesättigte oder ungesättigte, lineare oder verzweigte C₁-C₁₀-Alkylkette(n),
- eine C₃-C₆-Arylgruppe, die substituiert ist durch: ein primäres Amin, ein sekundäres Amin, ein tertiäres Amin, und/oder durch eine C₃-C₆-Arylgruppe, und/oder durch eine oder mehrere gesättigte oder ungesättigte, lineare oder verzweigte C₁-C₁₀-Alkylkette(n).

7. Kit gemäß einem der Ansprüche 1 bis 6, **dadurch gekennzeichnet, dass** das Gewichtsverhältnis von Salz (e) zu dem Gewicht der endgültigen polymerisierbaren Zusammensetzung, die die Teile A und B umfasst, zwischen 0,10 % und 5 %, vorzugsweise zwischen 0,5 % und 3 %, liegt.

8. Kit gemäß einem der Ansprüche 1 bis 7, **dadurch gekennzeichnet, dass** das Gewichtsverhältnis des Co-Initiators (b) zum Gewicht der endgültigen polymerisierbaren Zusammensetzung, die die Teile A und B umfasst, zwischen 0,10 % und 5 %, vorzugsweise zwischen 0,5 % und 3 %, liegt.

9. Polymerisierbare Zusammensetzung, umfassend:
- mindestens ein reaktives Monomer (a1) gegenüber einer kationischen Spezies oder einer sauren Spezies nach Lewis oder Brönsted, insbesondere gemäß einem der Ansprüche 2 bis 4 definiert,
- mindestens einen Co-Initiator (b), insbesondere gemäß einem der Ansprüche 5 und 8 definiert,
- optional mindestens einen Photosensibilisator (c),
- mindestens ein kationisches Salz (e), das gemäß Anspruch 1 definiert ist, und
- optional mindestens ein Lösungsmittel und/oder mindestens ein reaktives Monomer (a2) gegenüber einer kationischen Spezies oder einer sauren Spezies nach Lewis oder Brönsted, insbesondere gemäß einem der Ansprüche 2 bis 4 definiert,
- optional mindestens ein die Polymerisationsgeschwindigkeit regulierendes Mittel (d), insbesondere gemäß Anspruch 6 definiert.

10. Verfahren zur Herstellung einer Beschichtung oder eines Verbundmaterials, umfassend die folgenden Schritte:
(i) Bereitstellen eines Teils A, der aus einer Zusammensetzung besteht, die mindestens ein reaktives Monomer (a1) gegenüber einer kationischen Spezies oder einer sauren Spezies nach Lewis oder Brönsted und mindestens einen Co-Initiator (b) umfasst, und eines Teils B, der optional ein Lösungsmittel und/oder mindestens ein reaktives Monomer (a2) gegenüber einer kationischen Spezies oder einer sauren Spezies nach Lewis oder Brönsted und mindestens ein kationisches Salz (e), ausgewählt aus den Salzen der nachstehenden Formeln s1, s2, s3 und s4, umfasst, 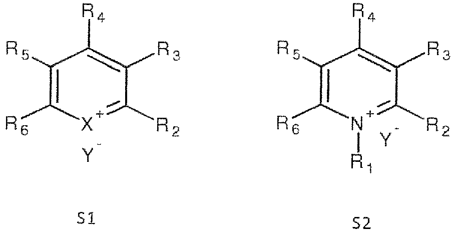 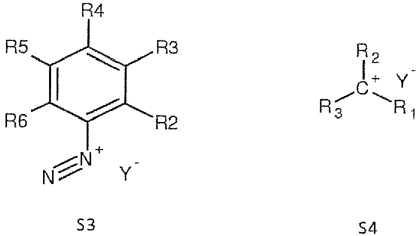 wobei X ein Kohlenstoffatom oder ein positiv geladenes Heteroatom darstellt: Stickstoff, Y eine oder mehrere stabilisierende anionische Spezies der kationischen Spezies des Salzes S1 oder S2 oder S3 oder S4 darstellt, insbesondere umfassend mindestens eine anionische Spezies, einzeln oder in Kombination ausgewählt aus Br⁻, Cl⁻ , BF₄⁻, PF₆⁻, AsF₆⁻, AnF₆⁻, SbF₆⁻, SnF₆⁻, ClO₄⁻, Sulfonaten, R₁ bis R₆ unabhängig voneinander aus dem oder den folgenden Atom(en) und der oder den folgenden Gruppe(n) einzeln oder in Kombination ausgewählt werden und gegebenenfalls so angeordnet sind, dass sie eine oder mehrere positive Ladungen tragen: ein Wasserstoffatom, eine Nitro-NO₂-Gruppe eine Cyano-CN-Gruppe, ein Halogenatom, eine C₁-C₂₀-Alkylgruppe, die gegebenenfalls durch eine oder mehrere Gruppe(n) oder ein oder mehrere Atom(e) substituiert ist, die (das) unabhängig aus der Liste I ausgewählt sind (ist), die die folgenden Gruppen oder Atome umfasst: Hydroxyl, Carbonyl, Alkenyl, Aryl, Heteroaryl, Ether, Ester, Aldehyd, Keton, Carbonsäure, ein Halogenatom, primäres Amin, sekundäres Amin, tertiäres Amin, primäres Amid, sekundäres Amin, tertiäres Amin, Harnstoff, Thioester, Thiocarbonat, Sulfoxid, Sulfon, Phosphin, Phosphoran, Phosphinoxid, Cycloalkyl, Heterocycloalkyl oder eine Kombination davon, eine C₁-C₂₀-Alkoxygruppe, die gegebenenfalls durch eine C₁-C₂₀-Alkylgruppe und/oder eine oder mehrere Gruppe(n) oder ein oder mehrere Atom(e) substituiert ist, die aus der Liste I beliebig ausgewählt wird (werden), eine Arylgruppe, eine Heteroarylgruppe, eine Cycloalkylgruppe, eine Heterocycloalkylgruppe, wobei die genannte(n) (Hetero)Arylgruppe(n) und/oder die genannte(n) (Hetero)Cycloalkylgruppe(n) gegebenenfalls durch eine oder mehrere Gruppe(n) substituiert ist (sind), die unabhängig voneinander aus der Liste I ausgewählt sind, eine Acylgruppe, eine Aroylgruppe, eine Carbonylalkoxygruppe, eine Carbamylgruppe, und gegebenenfalls ein Photosensibilisator (c), der beliebig in Teil A und/oder Teil B enthalten ist, und Mischen der Teile A und B zur Herstellung einer polymerisierbaren Zusammensetzung, oder
(i") Bereitstellen einer polymerisierbaren Zusammensetzung, die das mindestens eine Monomer (a1), den mindestens einen Co-Initiator (b), das mindestens eine kationische Salz (e) und optional den Photosensibilisator (c), wie in Absatz (i) definiert, umfasst, und
(ii) Aufbringen der polymerisierbaren Zusammensetzung in einer oder mehreren Schichten auf ein Substrat oder Imprägnieren einer Verstärkung mit der polymerisierbaren Zusammensetzung, und
(iii) Polymerisieren des mindestens einen Monomers (a1) unter der Wirkung eines Kations oder einer sauren Spezies nach Lewis oder Brönsted, gebildet durch das Salz (e) unter der Einwirkung des mindestens einen Co-Initiators (b), ohne Zufuhr von externer Wärme zu der polymerisierbaren Zusammensetzung, und optional unter Einwirkung von Strahlung oder Elektronenbeschuss zur Bildung einer Beschichtung oder eines Verbundwerkstoffes.

11. Verfahren gemäß Anspruch 10, **dadurch gekennzeichnet, dass** Schritt iii) bei einer Temperatur zwischen 10°C und 30°C stattfindet.

12. Verwendung eines gemäß Anspruch 1 definierten kationischen Salzes (e) zur kationischen Polymerisation von mindestens einem reaktiven Monomer (a1), das gemäß einem der Ansprüche 1 bis 4 definiert ist, in Gegenwart von mindestens einem Co-Initiator (b), insbesondere gemäß einem der Ansprüche 5 und 8, gegebenenfalls unter Strahlung oder Elektronenbeschuss.

13. Verwendung eines kationischen Salzes (e) gemäß Anspruch 12, wobei das kationische Salz (e) das Salz S1 ist und X ein Sauerstoffatom ist.

## Claims

1. A kit for a polymerisable composition, said kit comprising:
I. a portion A constituted by a composition comprising at least one monomer (a1) that is reactive towards a cationic species or a Lewis or Brönsted acid species, and at least one co-initiator (b);
II. a portion B optionally comprising a solvent and/or at least one monomer (a2) that is reactive towards a cationic species or a Lewis or Brönsted acid species, and at least one cationic salt (e) selected from the salts with formula S1, S3, and S4 below; 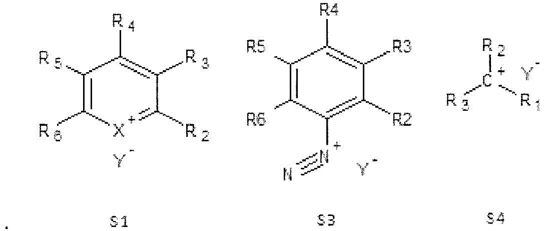 in which X represents a carbon atom or a positively charged heteroatom other than nitrogen; Y represents one or more stabilizing anionic species for the cationic species of the salt S1 or S3, or S4, in particular comprising at least one anionic species selected, alone or in combination, from Br⁻, Cl⁻, BF₄⁻, PF₆⁻, AsF₆⁻, AnF₆⁻, SbF₆⁻, SnF₆⁻ , ClO₄⁻, sulfonates; R₁ to R₆, independently of one another, are selected from the following atom or atoms or group or groups, alone or in combination, optionally arranged so as to carry one or more positive charges: a hydrogen atom; a nitro group -NO₂; a cyano group -CN; a halogen atom; a C₁-C₂₀ alkyl group, optionally substituted with one or more group(s) or one or more atom(s) selected independently from list I comprising the following groups or atoms: hydroxyl; carbonyl, alkenyl, aryl, heteroaryl, ether, ester, aldehyde, ketone, carboxylic acid, a halogen atom, primary amine, secondary amine, tertiary amine, primary amide, secondary amine, tertiary amine, urea, thioester, thiocarbonate, sulfoxide, sulfone, phosphine, phosphorane, phosphine oxide, cycloalkyl, heterocycloalkyl, or combinations thereof; a C₁-C₂₀ alkoxy group, optionally substituted with a C₁-C₂₀ alkyl group and/or one or more group(s) or one or more atom(s) selected equally well from list I; an aryl group; a heteroaryl group; a cycloalkyle group; a heterocycloalkyl group; the or said (hetero)aryl groups and/or the or said (hetero)cycloalkyl groups optionally being substituted with one or more group(s) independently selected from list I; an acyl group; an aroyl group; an alkoxycarbonyl group; a carbamyl group; and optionally a photosensitizer (c) that may equally well be in the portion A and/or in the portion B.

2. The kit according to claim 1, **characterized in that** the reactive monomer (a1), and optionally the reactive monomer (a2), is/are selected or include(s) at least one group selected from the list constituted by: cyclic ethers, in particular oxiranes; oxetanes; oxolanes; oxanes; cyclic acetals; cyclic amines; cyclic iminoethers; cyclic sulfides; vinyls; cyclic esters; cyclic amides; cycloalkyls substituted with at least one phosphorus atom; and cyclic siloxanes.

3. The kit according to claim 1 or claim 2, **characterized in that** the monomer (a1), and optionally the monomer (a2), is/are or include (s) a (C₃-C₂₀(hetero)cycloalkyl)ₙ group, with 1 ≤ n ≤ 5, n being an integer, said (hetero)cycloalkyl(s) being saturated or unsaturated and comprising, in at least one cycle, at least one function or one or more atom(s) or a group selected from the list constituted by: an ether group; an oxygen atom; two oxygen atoms; three oxygen atoms; a primary amine; a secondary amine; a tertiary amine; a primary amide; a secondary amide; a tertiary amide; an ester group; a carbonate group; an orthoester group; a -O-Si-O function; a vinylether function (-O-CH=CH₂); a halogen atom and a sulfur atom.

4. The kit according to any one of claims 1 to 3, **characterized in that** the reactive monomer (a1), and optionally the reactive monomer (a2), is/are selected from cycloaliphatic epoxies, in particular dicycloaliphatic epoxies, oxetanes, or a mixture thereof.

5. The kit according to any one of claims 1 to 4, **characterized in that** the co-initiator (b) is selected from or includes at least one group selected from list II constituted by: hydrogen peroxide (H₂O₂); water (H₂O); a C₁-C₂₀ (halo)alkyl group substituted with a hydroperoxide (-OOH) and/or with a thiol group (-SH); a C₁-C₂₀ aryl group substituted with a hydroperoxide (-OOH) and/or with a thiol group (-SH); a C₁-C₂₀ heteroaryl group substituted with a hydroperoxide (-OOH) and/or with a thiol group (-SH); a C₁-C₂₀ cycloalkyl group substituted with a hydroperoxide (-OOH) and/or with a thiol group (-SH); a C₁-C₂₀ heterocycloalkyl group substituted with a hydroperoxide (-OOH) and/or with a thiol group (-SH); an alkenyl group optionally including at least one ether group; said group(s) optionally being substituted with one or more (-OH) groups.

6. The kit according to any one of claims 1 to 5, **characterized in that** the portion A and/or the portion B include(s) a polymerisation rate regulating agent (d) that is or includes:
- a C₃-C₆ heteroaryl wherein at least one atom of the heterocycle is nitrogen, said heterocycle being substituted with: one or more C₃-C₆ aryl group(s), such as a phenyl group, a pyrane group, a furan group or a thiophene group; and/or with one or more C₁ to C₁₀ alkyl chains saturated or not, linear or branched;
- a C₃-C₆ aryl group substituted with: a primary amine, a secondary amine, a tertiary amine; and/or with a C₃-C₆, aryl group; and/or with one or more C₁ to C₁₀ alkyl chains saturated or not, linear or branched.

7. The kit according to any one of claims 1 to 6, **characterized in that** the proportion by weight of salt (e) relative to the weight of the final polymerisable composition comprising the portions A and B is in the range 0.10% to 5%, preferably in the range 0.5% to 3%.

8. The kit according to any one of claims 1 to 7, **characterized in that** the proportion by weight of the co-initiator (b) relative to the weight of the final polymerisable composition comprising the portions A and B is in the range 0.10% to 5%, preferably in the range 0.5% to 3%.

9. A polymerisable composition comprising:
- at least one monomer (a1) that is reactive towards a cationic species or a Lewis or Brönsted acid species, in particular defined in accordance with any one of claims 2 to 4;
- at least one co-initiator (b), in particular defined in accordance with one or the other of claims 5 and 8;
- optionally, at least one photosensitizer (c);
- at least one cationic salt (e) defined in accordance with claim 1; and
- optionally at least one solvent and/or at least one monomer (a2) that is reactive towards a cationic species or a Lewis or Brönsted acid species, in particular defined in accordance with any one of claims 2 to 4;
- optionally, at least one polymerisation rate regulating agent (d), in particular defined in accordance with claim 6.

10. A method of producing a coating or a composite material, comprising the following steps:
(i) providing a portion A constituted by a composition comprising at least one monomer (a1) that is reactive towards a cationic species or a Lewis or Brönsted acid species, and at least one co-initiator (b); and a portion B optionally including a solvent and/or at least one monomer (a2) that is reactive towards a cationic species or a Lewis or Brönsted acid species, and at least one cationic salt (e) selected from the salts with formula S1, S2, S3, and S4 below; 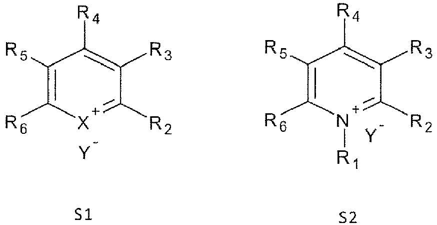 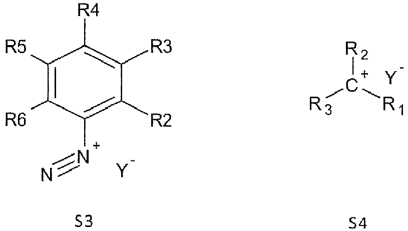 in which X represents a carbon atom or a positively charged heteroatom other than nitrogen; Y represents one or more stabilizing anionic species for the cationic species of the salt S1 or S2 or S3, or S4, in particular comprising at least one anionic species selected, alone or in combination, from Br⁻, Cl⁻, BF₄⁻, PF₆⁻, AsF₆⁻, AnF₆⁻, SbF₆⁻, SnF₆⁻, ClO₄⁻, sulfonates; R₁ to R₆, independently of one another, are selected from the following atom or atoms or group or groups, alone or in combination, optionally arranged so as to carry one or more positive charges: a hydrogen atom; a nitro group -NO₂; a cyano group -CN; a halogen atom; a C₁-C₂₀ alkyl group, optionally substituted with one or more group(s) or one or more atom(s) selected independently from list I comprising the following groups or atoms: hydroxyl; carbonyl, alkenyl, aryl, heteroaryl, ether, ester, aldehyde, ketone, carboxylic acid, a halogen atom, primary amine, secondary amine, tertiary amine, primary amide, secondary amine, tertiary amine, urea, thioester, thiocarbonate, sulfoxide, sulfone, phosphine, phosphorane, phosphine oxide, cycloalkyl, heterocycloalkyl, or combinations thereof; a C₁-C₂₀ alkoxy group, optionally substituted with a C₁-C₂₀ alkyl group and/or one or more group(s) or one or more atom(s) selected equally well from list I; an aryl group; a heteroaryl group; a cycloalkyl group; a heterocycloalkyl group; the or said (hetero)aryl groups and/or the or said (hetero)cycloalkyl groups optionally being substituted with one or more group(s) independently selected from list I; an acyl group; an aroyl group; an alkoxycarbonyl group; a carbamyl group; and optionally a photosensitizer (c) that may equally well be in the portion A and/or in the portion B; and the mixture of the portions A and B in order to form a polymerisable composition; or
(i") providing a polymerisable composition comprising said at least one monomer (a1), said at least one co-initiator (b), said at least one cationic salt (e), and optionally said photosensitizer (c), defined in paragraph (i); and
(ii) applying said polymerisable composition in one or more layers to a substrate or impregnating a reinforcement with said polymerisable composition; and
(iii) polymerising said at least one monomer (a1) under the action of a cation or of a Lewis or Brönsted acid species formed by the salt (e) under the action of said at least one co-initiator (b), without adding external heat to said polymerisable composition, and optionally under the action of radiation or an electron bombardment, in order to form a coating or a composite material.

11. The method according to claim 10, **characterized in that** the step iii) is carried out at a temperature in the range 10°C to 30°C.

12. Use of a cationic salt (e) defined according to claim 1, for the cationic polymerisation of at least one reactive monomer (a1) defined according to any one of claims 1 to 4 in the presence of at least one co-initiator (b), in particular defined according to one or the other of claims 5 and 8, optionally under radiation or electron bombardment.

13. The use of a cationic salt (e) according to claim 12, wherein the cationic salt (e) is the salt S1, and X is an oxygen atom.
